(19) Europäisches Patentamt
European Patent Office
Office européen des brevets

(11) EP 0 395 583 B1

(12) **EUROPEAN PATENT SPECIFICATION**

(45) Date of publication and mention of the grant of the patent:
**03.09.1997 Bulletin 1997/36**

(51) Int Cl.[6]: **C08G 77/46**, C08F 30/08, C08F 246/00, G02B 1/04

(21) Application number: **90810308.8**

(22) Date of filing: **18.04.1990**

(54) **Wettable, flexible, oxygen permeable contact lens containing block copolymer polysiloxane-polyoxyalkylene backbone units**

Weiche, benetzbare, sauerstoffdurchlässige Kontaktlinse mit Polysiloxan-Polyoxyalkylen-Blockcopolymer-Einheiten in der Hauptkette

Lentille de contact souple, mouillable et perméable à l'oxygène contenant dans la chaîne principale des unités d'un copolymère séquencé polysiloxane-poly-(oxyalkylène)

(84) Designated Contracting States:
**AT BE CH DE DK ES FR GB GR IT LI LU NL SE**

(30) Priority: **24.04.1989 US 342848**
**24.04.1989 US 342847**

(43) Date of publication of application:
**31.10.1990 Bulletin 1990/44**

(73) Proprietor: **Novartis AG**
**4058 Basel (CH)**

(72) Inventors:
- **Robertson, J. Richard**
  **Alpharetta, Georgia 30201 (US)**
- **Su, Kai C.**
  **Alpharetta, Georgia 30201 (US)**
- **Goldenberg, Merrill S.**
  **Teaneck, New Jersey 07666 (US)**
- **Mueller, Karl F.**
  **New York, New York 10024 (US)**

(56) References cited:
**EP-A- 0 330 616**
**EP-A- 0 330 617**
**US-A- 3 179 622**
**US-A- 4 543 398**
**US-A-47 040 533**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 395 583 B1

## Description

This invention relates to ophthalmic devices, such as contact lenses and intraocular implants, and particularly contact lenses of a block copolymer containing polysiloxane and polyoxyalkylene oxide units possessing an advantageous blend of desirable properties including a) high oxygen permeability, b) good wettability, c) flexibility and d) optical clarity, in the ocular environment of use. The invention further relates to the polymers from which the ophthalmic devices are fabricated and the special macromers used to prepare the polymers.

The use of siloxane containing materials of various types in the fabrication of ophthalmic devices is well known.

Thus, in U.S. 3,996,187; 3,996,189; 3,341,490 and 3,228,741 there are described contact lenses fabricated from poly (organosiloxanes) containing fillers. While such lenses are generally soft and of high oxygen permeability, the use of fillers such as silica, is indicated in order to increase the otherwise generally poor tear strength and tensile strength. Also, such silicone rubber lenses are characteristically both hydrophobic and lipophilic.

U.S. 3,808,178 discloses hard contact lenses fabricated from copolymers of a polysiloxanylalkyl acrylate or methacrylate ester and an alkyl acrylate or methacrylate ester. The monomers and polymers of the patent are hydrophobic and are incompatible with hydrophilic materials such as hydroxyethyl methacrylate. While the disclosed lenses have increased oxygen permeability, they are rigid.

U.S. 4,136,250 discloses hydrogels of a copolymer of about 20 to about 90 % of a hydrophilic (or mixture of hydrophilic and hydrophobic) monomer and about 10 to about 80 % of a polyolefinic siloxane macromer which can be used to fabricate a contact lens. Typically, such materials are recited to possess a degree of swelling of about 10 to about 12 %. It has been found, however, that the presence of substantial amounts of water therein limits the oxygen permeability of such materials.

U.S. 4,153,641 relates, in relevant part, to contact lenses fabricated from a polymer of a polyorganosiloxane terminated with vinylic groups, or copolymers thereof with other monomers. The exemplified products therein are hydrophobic in nature.

U.S. 4,486,577 relates to copolymers of about 8 to 70 % of a polysiloxane macromer containing at least two vinyl groups and 30-92 % of a monomer which is at least predominantly water insoluble to make polymers useful, for example, as contact lenses.

U.S. 3,179,622 relates to polysiloxane isocyanates having a structure wherein a polysiloxane moiety is capped on both sides with repeating groups (OR') wherein R' is a divalent aliphatic hydrocarbon radical containing 2 to 4 carbon atoms therein which are in turn endcapped e.g. with a diisocyanate. These isocyanates are disclosed as being storable, and they vulcanize by exposure to moisture without requiring heating. Any utility relating to contact lenses is not disclosed.

U.S. 4,740,533 relates to substantially non-swellable contact lenses containing block copolymer polysiloxane - polyoxyalkylene backbone units wherein the moiety terminating the siloxane units is restricted to linear alkylene having 1 to 6 carbon atoms.

Generally, such prior art contact lens compositions are either insufficiently hydrophilic in terms of surface wettability to be acceptable to the contact lens profession, even though they may possess high oxygen permeability, or such contact lenses are of acceptable wettability but the hydrophilicity is coupled with water swellability, which tends to limit optimum oxygen permeability.

It is an object of the present invention to overcome these and other disadvantages of the art by providing ophthalmic devices, such as contact lenses and corneal implants, possessing a high degree of surface wettability and possessing a high degree of oxygen permeability notwithstanding their swellability by employing a crosslinked block polymer containing polysiloxane and polyalkylene oxide units.

A further object of the invention is to provide a method of correcting visual defects in the form of refractive errors by fitting to the patient's eye in need of the same a corrective contact lens of such polymer. These and other objects of the invention are apparent from the following detailed description of the invention.

The present invention is directed to polymers derived from certain macromers, ophthalmic devices obtained from such polymers as well as methods of manufacturing each of the foregoing. Each of the above invention materials comprises segments "$Seg_1$" of the formula

$$\{R_{14}\text{-Sil-}(L)_h\text{-}R_{15}\text{-A}\} \quad \text{(Ia)}$$

wherein Sil is a divalent poly(disubstituted siloxane), A is a divalent polyoxyalkylene oxide (which may be substituted), $R_{15}$ is oxygen or an amino nitrogen, $R_{14}$ is a bond, an amino nitrogen, or oxygen, and L is a divalent linking group.

The present invention relates to novel polymers fabricated from certain macromers, ophthalmic devices prepared from the polymers (especially contact lenses and intraocular lenses), as well as methods of manufacture of each. The

ophthalmic devices ultimately fabricated are optically clear, hydrolytically stable, biologically inert, wettable, flexible, of good mechanical strength, oxygen permeable, and when fully swollen in their environment of use have a water content of at least 10 %.

The polymer is fabricated from a macromer of the formula

$$Cap_1\text{-}Grp_1\text{-}Cap_1 \qquad \text{(IIIa)}$$

wherein $Cap_1$ is represented by the formulae

$$R_{16}(L_4)_z(R_6)_w(A_1)_v(L_3)_x\text{—} \qquad \text{(VIa)}$$

or

$$R_{17}(L_4)_z(R_6)_w(A_1)_v(L_3)_x\text{—} \qquad \text{(VIIa),}$$

$Grp_1$ is represented by the formula

$$\text{—}(R_{15}\text{-}A\text{-}(L)_h)_a\text{-}Seg_1\text{-}((L)_h\text{-}R_{14}\text{-}Sil)_e\text{—} \qquad \text{(IIa)}$$

and wherein $Seg_1$ is represented by the formula

$$\{R_{14}\text{-}Sil\text{-}(L)_h\text{-}R_{15}\text{-}A\} \qquad \text{(Ia)}$$

wherein the variables have the following meaning:

$R_{14}$ is a bond, $-N(R_1)-$, or -O-;
$R_{15}$ is -O- or $-N(R_1)-$;
$R_1$ is hydrogen, $C_{1-4}$alkyl, or phenyl;
h is 1, or h may be zero when the atom of Sil to which it would otherwise be attached is carbon; provided that at least one h is different from zero;
each Sil is independently of the formula

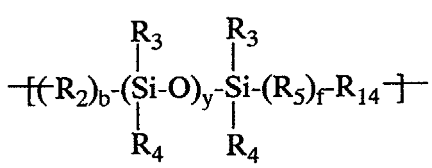

(IV)

each L is independently of the formula

$$-L_1R_6L_2-$$

and each A is independently of the formula

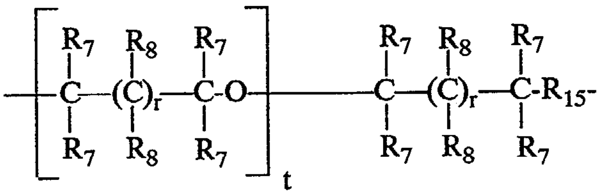

(V)

wherein within formula IV each $R_2$ and each $R_5$ is independently branched $C_{3-7}$alkylene, carbonyl, $C_{1-6}$alkylene carbonyl, $C_{1-4}$alkylene-(oxy-$C_{1-4}$alkylene)$_g$- or
$C_{1-4}$alkylene-$OCH_2$-(hydroxy $C_{1-4}$alkylene)-$CH_2$-;
with g being an integer of from 1 to 10;
each b and each f is 1;
each y is independently 1 to 200;
and each $R_3$ and each $R_4$ is independently selected from $C_{1-18}$alkyl and aryl of up to 12 carbon atoms;
and within L:
each $L_1$ and $L_2$ is independently

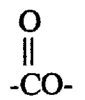 or 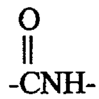

in which the oxygen or nitrogen is bound to $R_6$, or

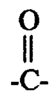

or a bond; and
each $R_6$ is independently

(i) -($C_{1-25}$aliphatic)- or
(ii) a group of the formula

$$-(C_{1-20}\text{aliphatic})_j-Q_k-[(\text{5-7 membered cycloaliphatic or aryl of up to 25 carbon atoms})-$$

$$Q_{(k1)}-(C_{1-20}\text{aliphatic})_{(j1)}]_D- \quad \text{(IX)},$$

each of j, k, kl and jl being independently zero or one, but if j is 0, then k is 0 and if jl is 0, then k1 is 0;
each D is 1 to 3;
each aliphatic group in the $R_6$ (i) or (ii) above is uninterrupted or interrupted at any point by Q;
each aliphatic, cycloaliphatic, and aryl group within the $R_6$ (i) or (ii) above is unsubstituted or substituted by one or more substituents which substituents are halogen, hydroxy, $C_{1-4}$alkyl, carboxy or $C_{1-12}$perhaloalkyl;
each Q is independently selected from -O-,

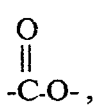, 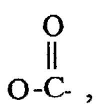, 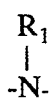, 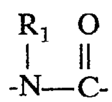, 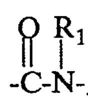,

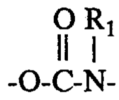, 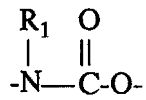, 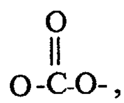, and 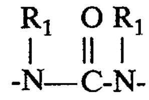;

and within formula V:
each r is independently 0-4;
each t is independently 3-200; and
each $R_7$ is independently selected from groups i) and iii) below and each $R_8$ is independently selected from groups i)-iv) below:

i) hydrogen, halogen, unsubstituted $C_{1-16}$alkyl, substituted $C_{1-16}$alkyl, unsubstituted $C_{2-16}$alkenyl, and substituted $C_{2-16}$alkenyl, wherein a) the substituents on the alkyl and alkenyl groups in i) are independently selected from fluoro, $C_{1-16}$alkoxy, $C_{2-16}$-alkanoyloxy, $C_{1-16}$alkoxy-C(O)-, $C_{2-16}$alkenyloxy-C(O)-, $C_{3-16}$alkenoyloxy, aryl of up to 10 carbon atoms, aryloxy of up to 10 carbon atoms, aroyl of up to 11 carbon atoms, aroyloxy of up to 11 carbon atoms, aryl (of up to 10 carbon atoms)-oxycarbonyl, $C_{3-8}$cycloalkyl, $C_{3-8}$cycloalkoxy, ($C_{3-8}$cycloalkyl)-carbonyloxy, ($C_{3-8}$cycloalkoxy)carbonyl, oxacycloalkyl of up to 7 carbon atoms, oxacycloalkoxy of up to 7 carbon atoms, oxacycloalkoxy (of up to 7 carbon atoms)-carbonyl, and oxacycloalkyl (of up to 7 carbon atoms)-carbonyloxy; and b) each alkyl and alkenyl group in a) being unsubstituted or further substituted by fluoro, $C_{1-6}$alkyl, or $C_{1-6}$alkoxy provided that said last mentioned alkoxy is not bound to a carbon already singly bound to another oxygen atom; and
ii) $C_{1-16}$alkoxy, $C_{2-16}$alkanoyloxy, $C_{1-16}$alkoxy-C(O)-, $C_{2-16}$alkenyloxy-C(O)- and $C_{3-16}$-alkenoyloxy, each of which may be further substituted by fluoro, aryl of up to 10 carbon atoms, or $C_{1-6}$alkoxy provided that the last mentioned alkoxy is not bound to a carbon atom which is singly bound to another oxygen;
iii) aryl of up to 10 carbon atoms, $C_{3-8}$cycloalkyl, and oxacycloalkyl of up to 7 carbon atoms, each of which is unsubstituted or substituted by a substituent selected from those indicated in i)a) and b) above;
iv) aryloxy of up to 10 carbon atoms, cycloalkoxy of up to 8 carbons, cycloalkyl (of up to 8 carbons)-C(O)O-, cycloalkoxy (of up to 8 carbons)-carbonyl, aroyloxy of up to 11 carbons, oxacycloalkoxy of up to 7 carbons, oxacycloalkenyloxy of up to 7 carbons, oxacycloalkoxy (of up to 7 carbon atoms)-carbonyl, oxacycloalkyl (of up to 7 carbon atoms)-carbonyloxy, aryloxy of up to 11 carbon atoms, and aroyloxy of up to 11 carbon atoms, each of which is unsubstituted or substituted by fluoro, $C_{1-6}$alkyl, or $C_{1-6}$alkoxy, provided said last mentioned alkoxy is not bound to a carbon atom which is singly bound to another oxygen; and 2 adjacent groups $R_7$ and $R_8$, together with the atoms to which they are attached may define a 5-8 membered cycloalkyl, cycloalkenyl, or oxacycloalkyl ring or a 6-14 membered bicyclo-ring,

a and e are each zero or 1, but a plus e is 1,
each w, x and z is independently zero or 1, but if w is zero, then one of x and z must be zero;
each V is independently zero or 1;
each $A_1$ is independently of the formula

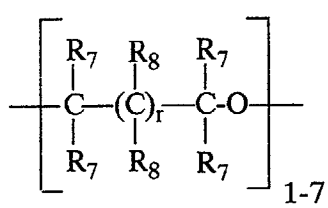 ;

each $L_3$ is independently

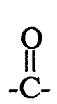, 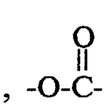, 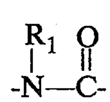

with the right hand portion attached to $Grp_1$ provided that the $Grp_1$ atom to which $L_3$ is attached is not a carbonyl

carbon, an amido nitrogen or a carboxy oxygen and $L_3$ is -O- or $-NR_1-$ when such $Grp_1$ atom is a carbonyl carbon; each $L_4$ is independently

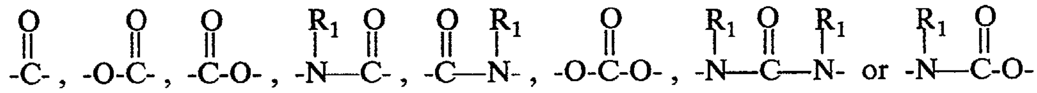

when w is one, and selected from the same group as $L_3$ when w is zero; each $R_{16}$ is independently of the formula

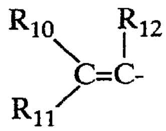

(VIII)

in which $R_{12}$ is hydrogen or $C_{1-7}$alkyl and each of $R_{10}$ and $R_{11}$ is independently hydrogen, $C_{1-7}$alkyl, $-COOR_{13}$ with $R_{13}$ being hydrogen or $C_{1-4}$alkyl;
and $R_{17}$ is selected from

a) H, $NH_2$, OH, -NCO, -NCS, -C(O)-halogen and $COOR_{12}$ when the non-$R_{17}$ atom to which it is attached is a non-carbonyl saturated carbon or the non-$R_{17}$ atom to which it is attached is a carbon which is part of a ring;
b) H, -C(O)-halogen, $-C(O)-R_{12}$, $-C(O)-OR_{12}$ and $R_{12}$ when the non-$R_{17}$ atom to which it is attached is an oxygen other than a carboxy oxygen;
c) H and $R_{12}$, when the non-$R_{17}$ atom to which it is attached is a carboxy oxygen;
d) $-C(O)-R_{12}$, $-C(O)-OR_{12}$, $-C(O)N(R_1)R_{12}$ and $R_{12}$ when the non-$R_{17}$ atom to which it is attached is an amino nitrogen, or $R_{12}$ when the non-$R_{17}$ atom to which it is attached is an amido nitrogen;
e) OH, $R_{12}$, $CH_2C(O)R_{12}$, $CH_2C(O)OR_{12}$, $NH_2$, and $-NHR_{12}$ when the non-$R_{17}$ atom to which it is attached is a carboxy carbon; and
f) H, OH, hal, $-OR_{12}$ when the non-$R_{17}$ atom to which it is attached is silicon;

said polymer having in its fully swollen state a water contenct of at least 10 % by weight.

Preferred embodiments are claimed in claims 2 to 17.

Similar macromers and e.g. polymers thereof are disclosed in European Patent Applications 330,616, 330,617 and 330,618. However, the residues $R_2$ and $R_5$ of Sil (formula IV) of the present invention are different from the corresponding residues in the above mentioned applications.

The macromers of formula IIIa or mixtures thereof are polymerized into polymers which may be shaped into ophthalmic devices such as intraocular implants and contact lenses or utilized as active agent releasing materials, especially release rate controlling membranes or matrices in transdermal drug delivery devices or as tablet release matricies in various applications. The polymers and ophthalmic devices of the invention will swell, when in contact with sufficient aqueous medium, until a fully swollen water content of from at least 10 % to about 95 % has been reached.

The ophthalmic devices and polymers of the invention exhibit a receding contact angle of less than 60; the measurement of which is conveniently performed using a modified "Wilhelmy Plate" technique, as described for example in J.D. Androde et al, Surface and Interfacial Aspects of Biomedical Polymers, Vol. 1, Surface Chemistry and Physics, Plenum Press, 1985, wherein a specimen sample, in the form of a plate of known dimensions, is immersed into the wetting solution, pure water, at a slow controlled rate, e.g. at 2-20 mm per minute.

The invention ophthalmic devices also have a high oxygen permeability, Dk. Dk is measured using a modification of ASTM standard D3985-81 in that a) 21 % oxygen, i.e. air, is used instead of 99-100 % oxygen, b) 0.5 $m^2$ surface area is used instead of 100 $m^2$, and c) the humidity is 95-100 % relative humidity instead of 0 % relative humidity. Typically, conventional, fully swollen polyhydroxyethylmethacrylate (pHEMA) lenses which are sparingly crosslinked have a Dk of 5-7 ($5\text{-}7 \times 10^{-10}$ mm·ml $O_2$/$cm^2$·sec·mmHg) or $5\text{-}7 \times 10^{-10}$ cm/sec. The ophthalmic devices of the instant invention have oxygen permeability Dk values generally greater than 7-10 ($10^{-10}$ cm/sec).

Preferred macromers of formulae I, II and III are those wherein n is zero or one, most preferably zero. Another group of preferred macromers of formulae I-III are those where m is 0-4, more preferably zero or one, most preferably zero. A highly preferred group of macromers of formulae I-III are those wherein both m and n are zero or one, most preferably both m and n are zero, to result in $Seg_1$, a most highly preferred embodiment of Seg, of the formula

$$\{R_{14}\text{-Sil-}(L)_h\text{-}R_{15}\text{-A}\} \quad \text{(Ia)}$$

and $Grp_1$, a most highly preferred embodiment of Grp, of the formula

$$-\!\!(R_{15}\text{-A-}(L)_h)_a\text{-Seg}_1\text{-}((L)_h\text{-}R_{14}\text{-Sil})_e\!\!- \quad \text{(IIa).}$$

Within Sil above, $R_2$ and $R_5$ are each independently preferably branched $C_{3-7}$alkylene, $C_{1-4}$alkylene-(oxy-$C_{2-4}$alkylene)$_g$- (wherein g is 1-10, preferably 1-4, more preferably 1-2, most preferably 1) or $C_{2-4}$alkylene-oxy-$CH_2$-(hydroxy-$C_{1-2}$alkylene)-$CH_2$, more preferably $C_{1-4}$-alkylene or -$CH_2$-$(OC_2H_4)_g$- with g preferably 1 or 2, most preferably 2.

Within Sil of formula IV, y is preferably 5 to 100, more preferably 10 to 50, most preferably 20 to 30. A particularly useful subembodiment has y = 25 to 29, especially when a is 1 and e is zero.

$R_{14}$ is preferably a bond or -O-, more preferably -O- .

$R_1$ is preferably methyl or hydrogen, more preferably hydrogen.

Each $R_3$ and $R_4$ is independently preferably $C_{1-7}$alkyl or phenyl, more preferably $C_{1-4}$-alkyl, still more preferably methyl or ethyl, most preferably methyl. A most preferably embodiment of Sil is when all of $R_3$ and $R_4$ are the same.

$R_{15}$ is preferably -O- or -NH-, more preferably -O- .

Each h is independently preferably 1, most preferably each h is one.

As stated above, the linking group L is $L_1R_6L_2$ wherein $L_1$ and $L_2$ are independently -COO- or -C(O)NH- (in which the oxygen or amido nitrogen is bound to $R_6$) or -C(O)- or a bond. Preferably, each $L_1$ and $L_2$ is independently -COO-, -C(O)NH-, or -C(O)-, more preferably -COO-, or -C(O)NH- and most preferably -C(O)NH- .

In a most highly preferred embodiment, all of the $L_1$ groups are the same and all of the $L_2$ groups are the same. In a still more highly preferred subembodiment, $L_1$ and $L_2$ are the same groups.

Each $R_6$ is preferably independently selected from

i) a divalent aliphatic group of up to 12 carbon atoms, preferably up to 7 carbon atoms, more preferably up to 4 carbon atoms;

ii) -$(C_{1-20}$aliphatic$)_j$-$Q_k$-[(5-7 membered cycloaliphatic or aryl of up to 25 carbon atoms)-$Q_{k1}$-$(C_{1-20}$aliphatic$)_{j1}]_D$- each of j, k, k1 and j1 being 0 or 1 but if j is zero, k must be zero and if j1 is zero, k1 must be zero; preferably each of the $C_{1-20}$aliphatic groups in

ii) are $C_{1-12}$aliphatic, more preferably $C_{1-7}$aliphatic, still more preferably $C_{1-4}$aliphatic, most preferably $C_{1-2}$aliphatic; preferably the $C_{5-7}$cycloaliphatic is $C_6$cycloaliphatic, most preferably a cyclohexane; preferably the aryl of up to 25 carbons is up to 14 carbons, more preferably up to 10 carbons, still more preferably of 6 carbons, most preferably a phenyl ring; preferably k is zero and preferably kl is zero, but most preferably k and kl are each zero; wherein each aliphatic group within i) and ii) above may be interrupted at any point by Q and each aliphatic, cycloaliphatic, and aryl group in i) or ii) is unsubstituted or substituted by one or more of halogen (preferably fluorine or chlorine, most preferably fluorine), hydroxy, $C_{1-4}$alkyl (preferably methyl, ethyl, propyl, or isopropyl, more preferably methyl or ethyl, most preferably methyl), carboxy, or $C_{1-12}$perhaloalkyl (preferably $C_{1-7}$ perhaloalkyl, more preferably $C_{1-4}$perhaloalkyl, still more preferably perhalomethyl, perhaloethyl, or perhalopropyl, most preferably perhalomethyl, with the halogen atom being preferably the same and preferably fluorine or chlorine, most preferably fluorine. D is preferably 1 or 2, more preferably 1.

Most preferably, the $R_6$ aliphatic groups are not interrupted by Q, and preferably are unsubstituted. Also most preferably, the $R_6$ cycloaliphatic groups are substituted by 1-4 substituents, preferably 1-3 substituents, which substituents are preferably selected from halogen (preferably fluorine), hydroxy, and $C_{1-4}$alkyl (preferably methyl, ethyl, propyl or isopropyl, most preferably methyl). In a most highly preferred embodiment each of the substituents is the same. Preferably, one of j and j1 is zero when the $R_6$ group contains a cycloaliphatic. The most highly preferred cycloaliphatic containing $R_6$ is (5-yl-1,3,3-trimethylcyclohexyl)-methyl (the residue of isophorone diisocyanate absent the two isocyanate groups).

Preferably, the $R_6$ aryl groups are unsubstituted or substituted by 1-4 substituents, preferably unsubstituted or substituted by 1 or 2 substituents, more preferably unsubstituted or substituted by 1 substituent which substituents are preferably selected from halogen (preferably fluorine), hydroxy, and $C_{1-4}$alkyl, more preferably $C_{1-4}$alkyl (preferably methyl, ethyl, propyl, or isopropyl, more preferably methyl). When more than one substituent is present per aryl, the substituents on any one aryl is preferably the same. A most highly preferred aryl embodiment of $R_6$ is toluenediyl.

A preferred subclass of $R_6$ includes: ethane-1,2-diyl; propane-1,2-diyl; propane-1,3-diyl; tetramethylene-diyl; hexane-1,6-diyl; cyclohexane-1,2-diyl; cyclohexane-1,3-diyl; 1,4-phenylene; bis[4-yl-cyclohexyl]methane; bis(4-yl-cyclohexenyl)methane; bis(4-yl-phenyl)methane; toluene-2,4-diyl; toluene-2,6-diyl; m- and p-tetramethylene-diyl; toluene-1,2-diyl; toluene-1,4-diyl; 3,3'-dichloro-4,4'-diyl-biphenyl; naphthalene-1,5-diyl; dihydro-toluene-diyl; tetrahydrotoluene-diyl; (5-yl-1,3,3-trimethylcyclohexyl)methyl; trimethylhexane-1,6-diyl (especially 2,2,4-trimethylhexane-1,6-diyl and 2,4,4-trimethylhexane-1,6-diyl); diethylfumarate-2,2'-diyl; 1-carboxypentane-1,5-diyl; naphthalene-1,2-, 1,3-, 1,6-, 1,7-, 1,8-, 2,7, and 2,3-diyl; 1-methylnaphthalene-2,4- and -2,7-diyl; methylcyclohexane-1,4-diyl; 6,(7)-methylnaphthalene-1,3-diyl; biphenyl-4,4'-diyl; -3,3'-dimethoxybisphenyl-4,4'-diyl; 2,2'-dimethylbiphenyl-4,4'- and 3,3'-diyl; bis (4-ylphenyl)ethane; and bis(4-ylphenyl)ether.

The polyalkylene oxide groups are of formula V and are homo or copolymeric blocks having a total of 3-200 alkylene oxide units and an additional terminating alkylene oxide or amine. However, no homopolymeric subblock is in excess of 100 repeating units. Preferably, no individual A has a subblock in excess of 15 repeating units. The portion of the alkylene oxide alkylene chain in the macromer backbone is a straight chain of 2 (r is zero) to 6 (r is 4) carbon atoms which may be unsubstituted or substituted as set forth previously.

Preferably the number of alkylene oxide units (i.e. t) is 3-150, more preferably 4-100, still more preferably 5-75, still even more preferably 6-70. Within this group are two highly preferred subembodiments, a) those with t of 25-70, preferably 50-68, most preferably 60-66 and b) those with t of 8-50, preferably at least 9, more preferably at least 10, still more preferably 13-35, even more preferably 15-30, most preferably 20-25, especially about 22.

Also highly preferable are two embodiments wherein at least 30 % of the A groups within the macromers of formula IIIa consist of 32 % and 35 %, respectively, of polyethylene glycol and 68 % and 65 %, respectively of polypropylene glycol, the polyethylene glycol blocks being of no more than 3 repeating units each and the polypropylene glycol blocks being of no more than 7 repeating units each.

While it is highly preferable that each A be of the same structure throughout the macromer, there is no such absolute requirement. Preferably at elast 20 %, more preferably 25 %, still more preferably 33 %, yet more preferably 50 %, even more preferably 75 % and most preferably at least 90 % of the A groups within any one macromer are the same.

Within each A group, there are two highly preferred subembodiments:

a) homopolymeric A units,

b) copolymeric A units of the 'EXE' type with the 'X' portion having approximately twice the number of repeating units as either 'E' (i.e. a poloxamer or reverse poloxamer like grouping).

While these two arrangements are highly preferred, other arrangements of alkylene oxide copolymeric type are also suitable.

Substituents on the alkylene oxide backbone portion (i.e. $R_7$ and $R_8$) are preferably selected from those set forth above. Preferably, each alkyl group within $R_7$ or $R_8$ whether alone or as a part of a larger group, has up to 4 carbon atoms, more preferably methy, ethyl, butyl, or t-butyl (provided that adjacent groups on a ring cannot each be t-butyl), most preferably methyl. Preferably, each alkenyl within $R_7$ or $R_8$, whether alone or as part of a larger group has 2-4 carbons, and is more preferably $C_{2-3}$alkenyl. An $R_7$ or $R_8$ aryl is preferably phenyl or naphthyl, most preferably phenyl. Cycloalkyl groups within $R_7$ and $R_8$ preferably have 5-6 ring members, most preferably 6 ring members. Oxacycloalkyl groups within $R_7$ or $R_8$ are preferably of 5-6 ring members, more preferably 6 members, each having only a single heteroatom in the ring which heteroatom is oxygen.

While the entire A unit may have a substantial fluorine substituent content, it is preferably at least 25 % halogen free, more preferably at least 30 % halogen free, still more preferably at least 40 % halogen free, yet more preferably at least 60 % halogen free, and most preferably substantially halogen free.

Preferably $R_7$ is hydrogen, $C_{1-7}$alkyl more preferably $C_{1-4}$alkyl, more preferably methyl; substituted $C_{1-4}$alkyl, most preferably substituted methyl; phenyl, substituted phenyl, benzyl, substituted benzyl, cyclohexyl, or $C_{4-5}$oxacycloalkyl, preferably $C_5$-oxacycloalkyl; each of the "substituents" preferably being $C_{1-6}$alkoxy (more preferably $C_{1-4}$alkoxy), fluorine, or when substituted on a group other than alkyl, $C_{1-6}$alkyl; the most preferable substituents being methoxy, fluorine, and when substituted on other than alkyl, methyl. Substituents on aryls within $R_7$ are preferably in the p-position. $R_8$ is preferably selected from the same group as $R_7$ and $C_{1-4}$alkoxy, phenoxy, and $C_6$cycloalkoxy, more preferably the same group as $R_7$.

At least one $Cap_1$ per macromer is independently of formula VIa or VIIa, but preferably the macromers have both $Cap_1$ groups of formula VIa. Most preferably, within each macromer the $Cap_1$ groups are the same.

Preferably, the $Cap_1$ groups are of formula VIa in which $R_{16}$ is preferably a vinyl group of formula VIII in which $R_{11}$ is hydrogen, $R_{10}$ is hydrogen, $C_{1-4}$alkyl (preferably methyl), or $-COOR_{13}$, with $R_{13}$ being hydrogen or methyl. More preferably the formula VI $Cap_1$ groups have an $R_{16}$ which is a vinyl of formula VIII in which $R_{10}$ and $R_{11}$ are each hydrogen and $R_{12}$ is hydrogen or methyl.

Very highly preferred macromers of formula IIIa have $R_{16}$ in formula VIa selected from those of formula VIII wherein

each of $R_{10}$-$R_{12}$ is independently hydrogen or methyl. Also preferred within this very highly preferred group are those wherein V is zero.

Highly preferred vinyl containing $Cap_1$ groups terminating the macromer are acryl, methacryl, and styryl groups bound directly to or through an ethyloxy or oxyethyloxy to the balance of $Cap_1$ or to the non-$Cap_1$ portion of the macromer.

Specifically preferred embodiments of the present invention within formulae IIa and III include those wherein

Sil is

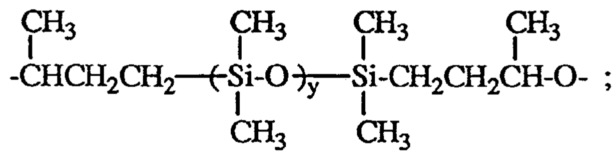

a is one;
e is zero;
$R_{14}$ and $R_{15}$ are each -O-;
L is

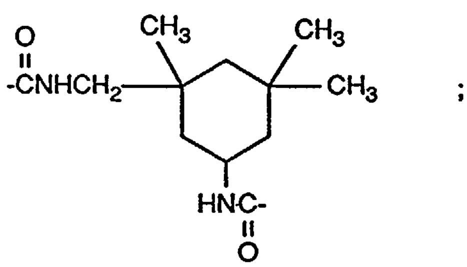

h is one;
A is $(CH_2CH_2O)_t$; and
$Cap_1$ is

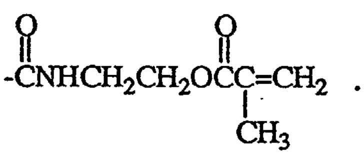

In the foregoing, all alkyl groups whether mentioned alone or as part of another group are preferably $C_1$-$C_4$ alkyl, such as methyl, ethyl, propyl and butyl, especially t-butyl, with the exception that adjacent groups on aryl rings cannot each be t-butyl. These alkyl groups may be straight chain or branched chain. When the alkyl is a substituent on a phenyl ring, it is preferably attached at the para position. Preferably alkenyl groups, whether alone or as part of another group, are $C_2$-$C_4$ alkenyl, such as ethenyl, propenyl and butenyl. Preferred aryl groups (whether alone or as part of another group) are phenyl and naphthyl, more preferably phenyl. Preferably the aryl groups are still further substituted by $C_1$-$C_4$ alkyl, more preferably t-butyl, most preferably in the para position. Halogen may be chloro, bromo, iodo or fluoro.

Color may be added to the polymerized material or to the macromers via typical dying techniques. One such manner is by insuring hydroxy groups are introduced onto the macromer backbone or substituent thereof.

Typical color groups useful in these embodiments include, but are not limited to, the hydroxy-reactive dyes known in the art under the tradename Remazol, manufactured by American Hoechst. Examples of the Remazol dyes which are especially useful are:

| Dye | Color Index Code |
|---|---|
| Remazol Brill Blue RW | Reactive Blue 19 |
| Remazol Yellow GR | Reactive Yellow 15 |
| Remazol Black B | Reactive Black 5 |
| Remazol Golden Orange 3GA | Reactive Orange 78 |
| Remazol Turquoise P | Reactive Blue 21 |

all of which have at least one group of the formula

$$-SO_2-CH_2CH_2O-SO_3^{\ominus}$$

which reacts with the polymer or monomer hydroxy group to yield a dye-$SO_2$-$CH_2$-$CH_2$-O-polymer or

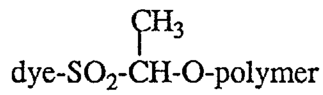

group, preferably the former. In such a manner, both excess free hydroxy groups are disposed of and colored contact lenses can be realized simultaneously.

If the polymerized macromers set forth above have inherently too low a water content, i.e. below 10 % water content, the polymer is not within this invention. However, the macromers can be copolymerized with a hydrophilic modifier so as to increase the water content to be within the instant invention. Whether the hydrophilic modifier is needed or not, and the amount which is needed, is dependent upon the desired polymer water content. Preferably, when the hydrophilic modifier is present, in accordance with the above, it is present in an amount of up to about 50 % by weight preferably about 1 % to about 30 %, more preferably about 5 % to about 25 %, still more preferably about 10 % to about 15 % of the resultant polymer.

In addition to the hydrophilic modifier, other comonomers which may be present in the polymer are monomers coreactive with the monomer of formula I. Such additional monomers may be present in a minor amount of up to about 20 % by weight of the resultant polymer. When such comonomers are excessively hydrophobic, additional hydrophilic modifier may be incorporated so as to achieve the appropriate water content.

The hydrophilic modifier is a monomer which is coreactive with a monomer of formula IIIa and is typically selected from

aa) polyethylene glycols of the formula

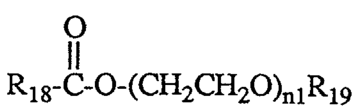

(A)

or

ab) pyrrolidones of the formula

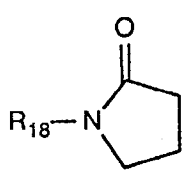

(B)

wherein $R_{19}$ is hydrogen or $C_1$-$C_7$ alkyl, preferably $C_1$-$C_4$ alkyl, n1 is an integer of from 1 - 25, or

ac) a compound of the formula

$$(R_{20}\text{-div})_{nz}Hy \qquad (C)$$

wherein $R_{18}$ is a polymerizable or reactive moiety selected from i) ethylenically unsaturated radicals, preferably vinyl, 1-methylvinyl, 2-methylvinyl, or allyl, ii) anhydrides, iii) amines, iv) acids, v) esters, vi) amides, vii) ethers, viii) acid halides, $R_{20}$ is selected from the meanings given for $R_{18}$ and ix) epoxy groups, especially glycidyl, x) isocyanates and isothiocyanates and xi) hydroxy;

div is selected from

ba) a divalent aliphatic group of up to 25 carbon atoms, preferably alkyl, alkenyl or alkynyl, which may also be interrupted, or terminated, or interrupted and terminated by oxy, carbonyloxy, amino, aminocarbonyl, oxycarbonyl, ureido, oxycarbonylamino, or carbonylamino;

bb) a divalent 5 - 7 membered cycloaliphatic or 5 - 7 membered cycloaliphatic-$C_1$-$C_{20}$-aliphatic group which may also be interrupted, terminated, or interrupted and terminated as in group ba) above except that said interruptions cannot occur within said cycloaliphatic portions;

bc) a divalent arylene group having 6-25 carbon atoms which is unsubstituted or substituted by at least one substituent selected from halogen, $C_1$-$C_4$ alkyl, and $C_1$-$C_{12}$ perhaloalkyl;

bd) a divalent aralkyl or alkaryl or -alkylene-aryl-alkylene- having 7 - 25 carbon atoms which is uninterrupted or interrupted in the alkyl portion, or terminated, or interrupted in the alkyl portion and terminated with an interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl;

be)

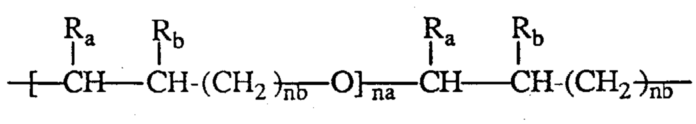

(D)

wherein na is an integer of 8-100; and

bea) Ra is hydrogen, Rb is methyl, and nb is zero; or
beb) Ra is methyl, Rb is hydrogen, and nb is zero; or
bec) Ra and Rb are hydrogen and nb is one;

nz is an integer of 1 up to the valence of Hy and where nz is less than the valence of Hy, the remaining valences of Hy are taken up with hydrogens;
and Hy is a hydrophilic group selected from

ca) morpholino; cyclic amide radicals of 5 - 7 ring members; saturated and unsaturated cyclic N,N-diamide radicals of 5 - 6 ring members; groups of the formula

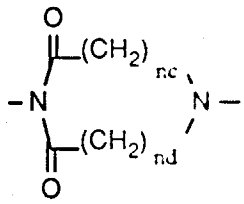 (E) or 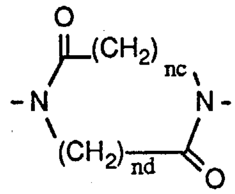 (E')

having 6 - 7 ring members wherein nc and nd are selected from 0 - 2; and cyclic amines of 5 - 6 ring members; each unsubstituted or substituted by hydroxy-$C_1$-$C_5$ alkyl, carboxy, or lower alkyl;

cb) tetrahydrofurfuryl;

cc) mono-, di-, and polysaccharide radicals, whether straight chain or cyclic, their corresponding sugar alcohol radicals, pentaerythritol radicals, and polyvinyl alcohol radicals; and

cd) polyhydroxy $C_2$-$C_7$ alkyl radicals;

and said reactive group $R_{18}$ is capable of reacting with one or more sites in said formula III.

Preferably the hydrophilic modifier has $R_{20}$ selected from

ia)

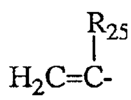

and the terminus of div to which it is bound is -C(O)$R_{26}$, the carbonyl being bound to $R_{18}$, where $R_{25}$ is hydrogen or methyl and $R_{26}$ is -O-, or -$NR_{27}$- with $R_{27}$ being hydrogen or lower alkyl;

ib) $H_2C$=CH- and the terminus of div to which it is bound is

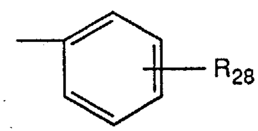 ,

the left hand bond being bound to $R_{20}$, wherein $R_{28}$ is -O-, -$NR_{27}$-, -C(O)-, -C(O)$NR_{27}$- or -C(O)O- ; and

ic)

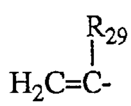

and the terminus of div to which it is bound is -C(O)$R_{30}$-, the carbonyl being bound to $R_{20}$ wherein $R_{30}$ is lower alkylene or -[$CH_2$CH(loweralkyl)-O]$_{1-5}$- and $R_{29}$ is hydrogen, lower alkyl, or cyano;

and has Hy selected from

ce) morpholino which is unsubstituted or mono- up to tetra-substituted by lower alkyl, preferably methyl or ethyl;

cf)

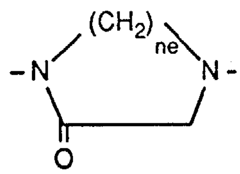

wherein ne is one, two, or three, preferably 1, each of which is unsubstituted or substituted, preferably mono- or disubstituted, by lower alkyl, preferably methyl or ethyl;

cg)

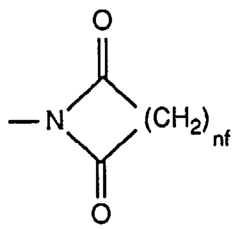

where nf is 2 or 3, preferably 2,

each of which is unsubstituted or substituted by lower alkyl, preferably methyl or ethyl;

ch) a divalent group of the formula

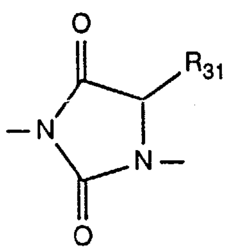

,

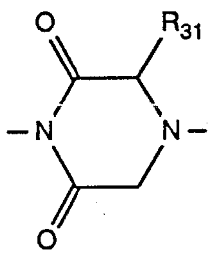

,

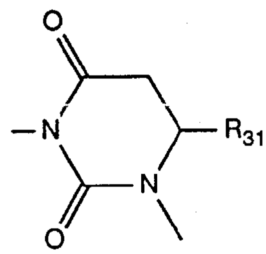

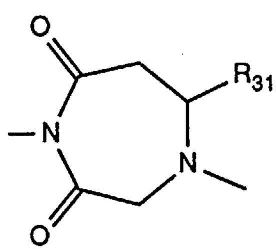

, or

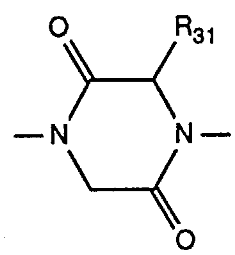

wherein $R_{31}$ is hydrogen or carboxy;

ci)

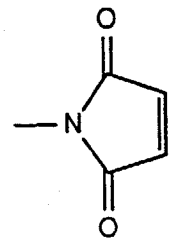
,

cj)

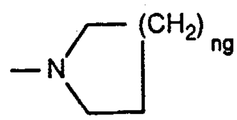

where ng is one or two, each of which is unsubstituted or substituted by lower alkyl, preferably methyl or ethyl;

ck)

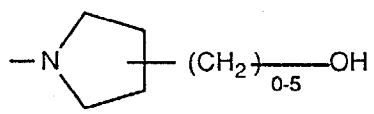
;

cl) a polyol selected from polyvinyl alcohol radicals,

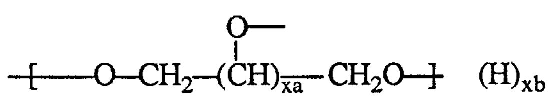

wherein xa is 2 - 10, preferably 3 - 4, and xb is an integer from zero, preferably at least 0.5 times xa up to xa + 1 inclusive, the cyclic saccharide analogs thereof, the di-tetra saccharides thereof, preferably having saccharide-saccharide links between the 1 and 4 carbon positions thereof, preferably β-linkages, $C(CH_2O)_4(H)_{xc}$ wherein xc is 0 - 3, and polyhydroxy lower alkylene glycol radicals wherein up to 50 %, preferably up to 25 %, more preferably up to 10 %, of the hydroxy groups are missing their alcoholic hydrogens.

Most preferably the hydrophilic modifier of formula (C) is selected from

aca)

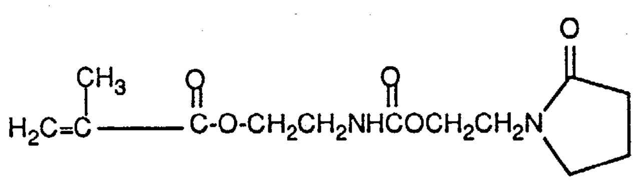
,

acb)

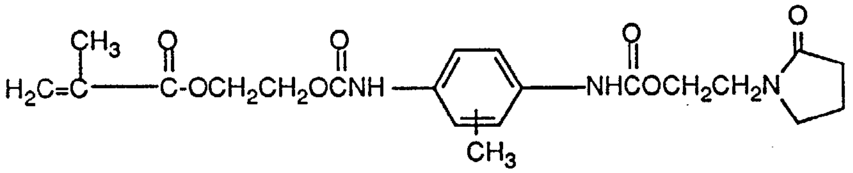

,

acc)

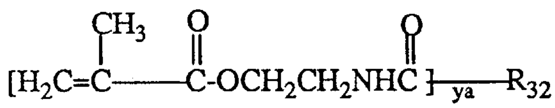

wherein $R_{32}$ is

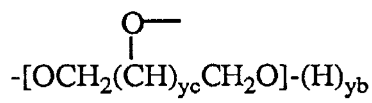

in which yc is 1-6, preferably 3-4 and yb is 0 up to (yc + 1), preferably (yc-1) to (yc + 1), more preferably yc to (yc + 1), and ya is 1 up to (yc + 2-yb),

acd)

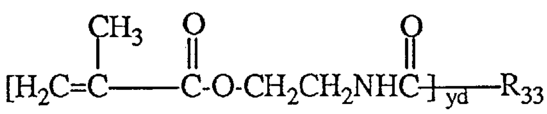

wherein $R_{33}$ is $C(CH_2O)_4(H)_{4-yd}$ and yd is 1 - 4, preferably 1 - 2;

ace) polyvinyl alcohol having at least one and up to 50 % preferably 25 %, more preferably 10 %, inclusive, of the alcoholic hydrogens thereof absent;

acf)

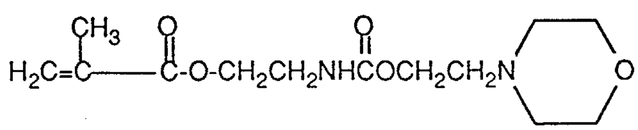

.

Preferably, when $Cap_1$ is a vinyl containing group or one or more of the aforementioned R groups within formula IIIa contain an ethylenically unsaturated group, then the macromer can be crosslinked in the presence of a vinylic group containing hydrophilic modifier and/or vinylic group containing crosslinking agents. The instant macromer can be crosslinked in the presence or absence of up to less than about 50 %, preferably up to about 30 %, most preferably up to about 10 % by weight of vinylically unsaturated hydrophilic modifiers and/or other vinylic comonomers.

When $Cap_1$ does not have a vinylic group, but takes part in crosslinking, $Cap_1$ is of formula VIIa. Crosslinking is then typically carried out by condensation with a tri- or polyfunctional coreactive monomer. For example, when $Cap_1$ terminates in OH, then the coreactive monomer functional group can be -COOH, OCN, SCN, $-NH_2$, -NH(alkyl) etc.; when $Cap_1$ terminates in $-NH_2$ or -NH(alkyl), the reactive comonomer functional group can be a conventional acyl leaving group; and when $Cap_1$ terminates in OCN- or SCN-, then the reactive comonomer functional group can be OH. Similarly, the other coreactive functional groups mentioned in terms of either $Cap_1$ or the coreactive monomer can be interchanged.

Suitable vinylic monomers and coreactive monomers for condensation are set forth below. However, the list is not exhaustive and those of ordinary skill will appreciate the modifications, additions, and alternatives which may also be employed.

However, the degree of crosslinking in the finished crosslinked polymer should not exceed 20 %, preferably not greater than 10 %, more preferably not greater than 5 %, still more preferably 1-4 %, most preferably 2-3 %.

A highly preferred embodiment within the polymers fabricated from macromers of formula IIIa, requires that not more than 20-70 %, preferably not more than 50 % of the A groups are polyethylene glycol. In another highly preferred group A is homopolymeric polyethylene oxide or polypropylene oxide.

The number of A units and the chain length and nature of the substituents on the polyoxyethylene segment is determined by the degree of wettability desired in the polymer of the compound of formula IIIa. In general, the polymer should be sufficiently hydrophilic in its surface properties such that the polymer exhibits a contact angle with distilled water at 20°C of less than 60°, preferably less than 40°, more preferably less than 25°, still more preferably less than 15°, most preferably less than 10°.

The greater the number of siloxane units, the greater the number of oxyalkylene units is generally required to reduce the contact angle to within the above limits.

As water is taken up, the oxygen permeability of the polymers tends to be reduced. However, with the water content and swellability increased due to hydrophilic modifier the drop in Dk over the low water content analogs is surprisingly less drastic than would otherwise be expected. Advantageously, the instant polymers absorb at least 10 % by weight water, preferably 15 - 90 % by weight, more preferably 20 - 85 % by weight, still more preferably 25 - 75 % by weigth, most preferably 35 - 55 % by weight water.

Highly preferred are those polymers which exhibit a contact angle of less than 25°, more preferably less than 15° and most preferably less than 10°.

The reactive vinylic macromers of the invention can characteristically be polymerized to form crosslinked polymers under conventional polymerization conditions.

If desired, the monomer reaction mixture may contain a catalytic amount of a conventional polymerization catalyst, preferably a free radical catalyst. Of particular interest are conventional peroxide and azo catalysts, such as hydrogen peroxide, benzoyl peroxide, tert-butyl peroctoate, benzoyl peroxide or azobis(isobutyronitrile).

The polymerization can generally be carried out at temperatures between about 20° and about 150°C, for a period between about 1 and about 24 hours. It is understood that the time and temperature in such a reaction are inversely related. Thus, temperatures employed in the upper end of the temperature range will generally provide reaction times near the lower end of the time range. Preferably, the polymerization is conducted in the presence of actinic radiation, such as UV light.

Depending upon the nature of the polymer mixture, it may be desirable for the polymers obtained from such polymerizations to be post cured, e.g. at a somewhat elevated temperature such as between about 60°C and about 150°C.

For the preparation of contact lenses, the polymer mixture may be cast directly in the shape of the lens, or the polymerization may be carried out in a mold having a shape convenient for further processing, such as in the shape of small cyclinders or "buttons", which can then be machined.

Minor amounts i.e. less than 50 %, preferably up to 30 %, and most preferably up to no more than about 10 % by weight, of conventional copolymerizable vinyl monomers other than hydrophilic modifiers, can be employed as extenders or the like, in the preparation of the instant polymer, as copolymer constituents. However, if the total hydrophilic modifier content is within the foregoing limits, the hydrophilic modifiers can also be used as such extenders. Suitable vinyl monomers include:
acrylates and methacrylates of the general formula

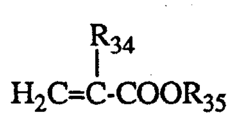

where $R_{34}$ is hydrogen or methyl and $R_{35}$ is a straight chain or branched aliphatic, cycloaliphatic or aromatic group having up to 20 carbon atoms which is unsubstituted or substituted by one or more alkoxy, alkanoyloxy or alkyl of up to 12 carbon atoms, or by halo, especially chloro or preferably fluoro, or $C_3$-$C_5$ polyalkyleneoxy of 2 to about 100 units;
acrylamides and methacrylamides of the general formula

$$H_2C=C(R_{34})-CONHR_{35}$$

where $R_{34}$ and $R_{35}$ are as defined above; vinyl ethers of the formula

$$H_2C=CH-O-R_{35}$$

where $R_{35}$ is as defined above; vinyl esters of the formula

$$H_2C=CH-OOC-R_{35}$$

where $R_{35}$ is as defined above;
maleates and fumarates of the formula

$$R_{35}OOC-HC=CH-COOR_{35}$$

where $R_{35}$ is as defined above;
and vinylic substituted hydrocarbons of the formula

$$R_{34}CH=CHR_{35}$$

where $R_{34}$ and $R_{35}$ are as defined above.

Useful monomers include, for example:
methyl-, ethyl-, propyl-, isopropyl-, butyl-, ethoxyethyl-, methoxyethyl-, ethoxypropyl-, phenyl-, benzyl-, cyclohexyl-, hexafluoroisopropyl-, or n-octyl-acrylates and -methacrylates as well as the corresponding acrylamides and methacrylamides: dimethylfumarate, dimethylmaleate, diethylfumarate, methyl vinyl ether, ethoxyethyl vinyl ether, vinyl acetate, vinyl propionate, vinyl benzoate, acrylonitrile, styrene, alpha-methyl styrene, 1-hexene, vinyl chloride, vinyl methyl ketone, vinyl stearate, 2-hexene and 2-ethylhexyl methacrylate.

In one preferred aspect, the instant polymers are free from copolymer units of such conventional monomers which are not hydrophilic modifiers.

The vinylic monomers of formula IIIa can be prepared by methods known, per se.

For example, the siloxane/polyalkylene oxide containing divinylic monomers of formula IIIa may be prepared by reacting a siloxane diol of the formula HO-Sil-H, wherein Sil is a group of formula IV, as defined hereinbefore, with a sufficient amount of a difunctional reactive group containing compound at least one of which reactive groups is coreactive with OH, such as isocyanate; activated carboxy, such as an anhydride, an acid halide or a carboxy ester, or is a leaving group, such as a halide, sulfato or the like, to form the corresponding reactive group containing endcapped derivative. Such reactive compounds for forming preferred macromers include toluene diisocyanate, isophorone diisocyanate, and polyalkylene oxide mono- or di-capped by isocyanate.

The resulting endcapped siloxane derivative can then be reacted with a polyoxyalkylene diol of the formula HO-(A)-H, wherein -A- is a group of formula V above to form the corresponding polyoxyalkylene - siloxane - polyoxyalkylene diol. This diol can be then reacted with a reactive end $Cap_1$ group containing monomer wherein the reactive group is an isocyanate; activated carboxy, such as an anhydride, an acid halide or carboxy ester, or is a leaving group such as halo, sulfato or the like to form the corresponding di($Cap_1$) derivative. Alternatively, the aforementioned polyoxyalkylene - siloxane - polyoxyalkylene diols can be further sequentially reacted with a further difunctional reactive group containing compound having the group -L- to form the corresponding di-functional reactive endcapped derivative which is then reacted with a siloxane of the formula HO-Sil-H. One may continue building up alternative polyoxyalkylene/siloxane unit containing diols in this manner, as desired. Then this diol may be endcapped with a reactive group containing vinylic monomer having a terminal '$Cap_1$' moiety or the diol reacted with a sufficient amount of difunctional reactive group containing compound to endcap the diol with a reactive group, such as e.g. an isocyanate, etc. group which is then reacted with the appropriate '$Cap_1$' containing compound, such as a vinylic amine or alcohol, or other copolymerizable monomer having a crosslinkable group to obtain the corresponding product of formula IIIa.

Of course, instead of starting with a siloxane of the formula HO-Sil-H and building up the alternating sequence therefrom, one may instead begin with a polyoxyalkylene diol of the formula HO-(A)-H and, after endcapping the same with difunctional reactive groups, condense the same with the siloxane until the desired number alternating siloxane/ polyalkylene oxide groups is attained and terminate the diol with Cap groups as described above.

Synthesis of the macromers may be accomplished neat or in solvents as indicated in the examples attached hereto in accordance with known synthetic techniques.

The above reactive monomers are characteristically polymerized under conventional polymerization conditions with a hydrophilic modifier of formulae A-C or a mixture of a hydrophilic modifier of formulae A-C and a copolymerizable monomer. In those vinylic macromers containing but one vinyl group, a minor amount e.g. from about 0.01 to about 5 weight percent, based on the macromer of formula IIIa, of a conventional crosslinking agent, may be employed. Suitable crosslinking agents include diolefinic monomers such as:

Allyl acrylate and methacrylate, alkylene glycol and polyalkylene glycol diacrylates and dimethacrylates, such as ethyleneglycol dimethacrylate, diethylene glycol dimethacrylate, and propylene glycol dimethacrylate; trimethylol propane triacrylate; pentaerythritol tetraacrylate, divinylbenzene; divinyl ether; divinyl sulfone; bisphenol A diacrylate or dimethacrylate; methylene bisacrylamide; diallyl phthalate; triallyl melamine and hexamethylene diacrylate and dimethacrylate. Also, such minor amounts of a crosslinking agent may be employed, if desired, in the polymerization of the di-vinyl monomer of formula IIIa.

When the macromers of formula IIIa have free hydroxy, isocyanato, carboxylic or amine groups, suitable crosslinking agents contain di- or polyfunctional co-reactive groups to form addition or condensation reactions linking 2 or more chains.

If desired, the macromer reaction mixture may contain a catalytic amount of a conventional catalyst, preferably a free radical catalyst. Of particular interest are conventional peroxide and azo catalysts, such as hydrogen peroxide, benzoyl peroxide, tert-butyl, peroctoate, benzoyl peroxide or azobis (isobutyronitrile).

The aforementioned reactions are generally straight forward additions or condensations and are typically conducted at a reaction temperature between about -10°C and about 100°C, depending upon the relative reactivity of the species involved, in the presence or absence of an inert diluent and in the optional presence of an addition or condensation catalyst if desired or appropriate. For reactions involving an isocyanate or acid halide, with a diol, for example, suitable optional catalysts include pyridine and triethylamine.

The siloxanes of the formula HO-Sil-H are known in the art and many are commercially readily available.

Also, the polyoxyalkylene diols of the formula HO-A-H are known or can be prepared by known methods.

Thus, the polyols of the formula HO-A-H are generally prepared by the addition reaction of t moles of an epoxide of formula X, or, assuming that A is a block copolymer of

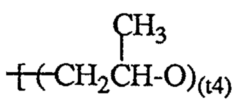 and $-(CH_2CH_2-O)_{(t5)}]_{(t6)}$

(especially when $[(t_4)+(t_5)](t_6)$ = about 30-70) of $(t_4)$ times $(t_6)$ moles of an epoxide of the formula

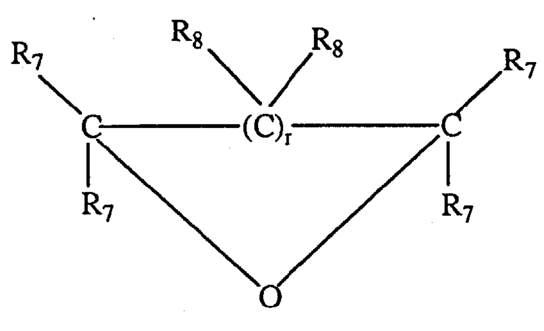

(X)

with $(t_5)$ times $(t_6)$ of a different epoxide of formula X, where $R_7$, $R_8$, r, t, $(t_4)$, $(t_5)$ and $(t_6)$ are as defined above, optionally in the presence of a conventional alkylation catalyst, at atmospheric to elevated pressures of up to about 3000 kPa gauge, at temperatures between 0°C and about 130°C, optionally in the presence of an inert diluent. If desired, one may add to the reaction mixture, prior to the reaction of the epoxides, an aliphatic, aromatic or cycloaliphatic alcohol, acid or amine having up to 14 carbon atoms to prepare the corresponding mono-ols.

The reaction between the epoxides, when mixtures of different epoxides are employed to obtain the polyol of the

formula HO-A-H, can be conducted by admixing the epoxides to obtain random copolymers or terpolymers, etc., or the addition can be conducted sequentially to form block copolymers having terminal hydroxy groups. Suitable catalysts include alkaline earth oxides, alkaline earth carbonates, alkyl zinc compounds, aluminum alkoxides, hydrates of ferric chloride, bromide and acetate, and gamma radiation. The reaction may also be initiated by the presence of a glycol, such as ethylene glycol or propylene glycol or by a polyol of higher functionality such as sucrose, or by an amine, such as ethylene diamine, toluenediamine, and so forth. Generally the length of time of the reaction will depend in part on the alkylene oxide employed, but can generally be from less than one to several score hours. Thus, ethylene oxide generally is about three times as active as propylene oxide, which in turn reacts more rapidly than 1,2-butylene oxide. The preparation of polyoxetanes and polytetrahydrofurans is generally initiated via ring opening oxonium formation using trialkyloxonium salts, carboxonium salts, acylium salts and the like.

Suitable diols of the formula HO-A-H include those prepared from epoxides such as: 1,2-propylene oxide; 1,2-butylene oxide; 1,2-epoxydecane; 1,2-epoxydodecane; 1,2-epoxyoctane; 2,3-epoxynorbornane; 1,2-epoxy-3-ethoxypropane; 1,2-epoxy-3-phenoxypropane; 2,3-epoxypropyl 4-methoxyphenyl ether; tetrahydrofuran; 1,2-epoxy-3-cyclohexyloxypropane; oxetane; 1,2-epoxy-5-hexene; 1,2-epoxyethylbenzene; 1,2-epoxy-1-methoxy-2-methylpropane; perfluorohexylethoxypropylene oxide; benzyloxypropylene oxide, and the like. Also, the aforementioned epoxides may be employed as mixtures thereof. Further, certain cyclic ethers of formula X where t is 3 and the carbocyclic portion of the ring is substituted are resistant to polymerization alone, but copolymerize quite readily with more reactive cyclic ethers. Suitable co-monomers include, for example, 2-methyl-tetrahydrofuran and 3-methyl-tetrahydrofuran. Also, while ethylene oxide may be employed as a co-monomer, ethylene oxide polymers, in the absence of more hydrophobic units, is characteristically too hydrophilic and absorbs too much aqueous fluid to be of use in accordance with the instant invention. However, ethylene oxide/propylene oxide copolymeric diols wherein there is 30-80 %, preferably greater than 50 %, more preferably greater than 66 % propylene oxide, on a mole basis, is sufficiently hydrophobic so as to be substantially non-swellable in aqueous media, and yet sufficiently hydrophilic so as to exhibit a contact angle with water of less than 60°; preferably less than 40°, more preferably less than 25°, more preferably less than 15°, most preferably less than 10°.

Many polymer diols of the formula HO-A-H are commercially available. Thus, suitable diol products include poloxamers having the general formula

$$HO(CH_2CH_2O)_{a'}\text{-}(CH(CH_3)CH_2O)_{b'}\text{-}(CH_2CH_2O)_{c'}\text{-}H$$

wherein b' has a value between about 16 and 100 and the sum of a' and c' is between about 4 and about 100. While each of the following poloxamers is beyond the current definition of the preferable A groups, they may be used to form the non-preferable A groups within any one macromer. For example, if 30 % of the A groups in a macromer are poloxamers of (a') = 5, (b') = 15, (c') = 5, then the remainder of the A groups in that macromer may be any of the poloxamers set forth below. Examples of such poloxamers and their average values of a', b' and c', include poloxamer 101 (a' is 2, b' is 16, c' is 2); poloxamer 122 (a' is 5, b' is 21, c' is 5); poloxamer 181 (a' is 3, b' is 30, c' is 3); poloxamer 212 (a' is 8, b' is 35, c' is 8); poloxamer 231 (a' is 6, b' is 39, c' is 6); poloxamer 282 (a' is 10, b' is 47, c' is 10); poloxamer 333 (a' is 7, b' is 54, c' is 7); poloxamer 401 (a' is 6, b' is 67, c' is 6).

Such poloxamers are available, e.g. from BASF Wyandotte under their Pluronic® brand name. Also suitable are the "reverse poloxamers", having polyethylene glycol bounded on each side by polypropylene glycol.

Polypropylene ether glycols include commercially available products having a molecular weight range between about 400 and about 4,000.

The hydrophilic modifiers can be prepared as disclosed in EP-A-331633 entitled HYDROPHILIC MODIFIER MONOMERS, invented by Frank Molock and Richard Robertson.

Typically, conventional fully swollen polyhydroxyethyl methacrylate lenses which are sparingly crosslinked possess a Dk($x10^{-10}$), (mm·ml $O_2$/$cm^2$·sec·mmHg) value of about 5-7.

The instant polymers for use as an ophthalmic device, such as a contact lens, possess a Dk($x10^{-10}$) value generally greater than 7 - 10, preferably greater than about 15, more preferably greater than about 20 and still more preferably greater than about 40, yet more preferably greater than 80, even more preferably greater than 100, most preferably at least 150.

The following examples are for illustrative purposes and are not to be construed as limiting the invention. All parts are by weight unless otherwise specified.

In the examples the following test methods were used in evaluating the polymer films:

a) Oxygen permeability (Dk) is determined from measurements on a Schema Versatae or Createch polarographic cell.

b) Wettability or lubricity is evaluated by a feel comparison to crosslinked polyHEMA (i.e. polymerized 2-hydroxyethyl methacrylate + 1 % ethylene glycol dimethacrylate). The surface lubricity of polyHEMA is designated (B); more wettable than polyHEMA is designated (A) and a less wettable surface than polyHEMA is designated (C).

c) Tensile strength is qualitatively evaluated by pulling on a sheet of the material by hand and then comparing the result to a material previously evaluated by a micromechanical tester to be 14 kg/cm$^2$. A measurement found to be similar to this "standard" is designated (2); a higher value is designated (1); a lower value is designated (3); while a much lower value is designated (4).

Example 1: This example illustrates the sequential synthesis of a polydimethyl-siloxane/polyether urethane-linked adduct, $Z_1${IPDI-PEG-IEM)$_2$, where $Z_1$ is a polydimethyl siloxane, IPDI is isophorone diisocyanate, PEG is a polyethylene glycol and IEM is isocyanatoethyl methacrylate; and, the solution polymerization of this adduct.

Synthesis of $Z_1${IPDI-PEG-IEM)$_2$, Diadduct: A stock solution of $Z_1${IPDI)$_2$ is first formed by combining 8.0054 g (0.0036 mole) Shin-Etsu X-61-504A (1000) (MW = 2212) with 1.6010 g (0.0072 mole) IPDI and 1 microliter of dibutyltin dilaurate (DBTL) and then stirring overnight at room temperature. The percentage of isocyanate reacted (generally 48-50 %) is determined by dibutylamine titration and varies with the precise value of $Z_1$ molecular weight actually used. Then, a calculated molar amount of PEG is dissolved in solvent and the corresponding amount of the $Z_1${IPDI)$_2$ stock solution is added to form $Z_1${IPDI-PEG)$_2$. The solution is reacted at 50°C with stirring overnight. IR verifies complete reaction of the isocyanate functionality (disappearance of absorption at 2270 cm$^{-1}$).

The calculated molar amount of IEM is added to a solution $Z_1${IPDI-PEG)$_2$ and reacted at room temperature overnight with stirring.

Polymerization of Diadduct; Hydrogel Formation: The $Z_1${IPDI-PEG-IEM)$_2$ adduct in solvent is mixed with initiator (benzoin methyl ether, BME) poured into flat "sandwich" molds and polymerized with UV light (Sylvania, Blacklight Blue, 15 W) at room temperature for 3 hours. The polymerized films are removed from the molds, extracted in water several times, heated in boiling water for 10 minutes and then allowed to equilibrate in room temperature water (generally overnight).

Example 2: This example shows the resultant water contents and oxygen permeability values of polydimethyl siloxane/PEG hydrogels, i.e. crosslinked $Z_1${IPDI-PEG-IEM)$_2$, solution polymerized using different molecular weights of PEG (200, 400, 600, 900, 1000, 1500, and 2000). Different solvents are used as indicated below to achieve solubility of the diadduct. Films are prepared as in example 1 except for samples 1, 2 and 3 in which PEG and $Z_1${IPDI)$_2$ are reacted at room temperature and samples 6 and 7 in which PEG and $Z_1${IPDI)$_2$ are reacted at 50°C in the presence of additional dibutyltin dilaurate catalyst.

| Sample | Wt.% In the Polymerization Mixture | | | | | |
|---|---|---|---|---|---|---|
| | $Z_1$ | IPDI | PEG (MW) | IEM | Solvent | BME |
| 1* | 34.4 | 6.9 | 6.1 (200) | 4.9 | 47.7 (1) | 0.18 |
| 2 | 28.0 | 5.6 | 10.9 (400) | 4.2 | 51.2 (2) | 0.12 |
| 3 | 27.5 | 5.5 | 15.0 (600) | 3.8 | 48.1 (2) | 0.11 |
| 4 | 24.1 | 4.8 | 19.5 (900) | 3.5 | 48.1 (1) | 0.10 |
| 5 | 23.0 | 4.6 | 20.7 (1000) | 3.2 | 48.5 (1) | 0.14 |
| 6 | 18.8 | 3.8 | 25.5 (1500) | 2.7 | 49.3 (3) | 0.10 |
| 7 | 16.6 | 3.3 | 29.6 (2000) | 2.4 | 48.0 (3) | 0.49 |
| solvents: (1) = isopropyl acetate, (2) = dichloromethane, (3) = acetone | | | | | | |

* not comprised by the present claims

| Sample | Physical Properties of Hydrogel | | | |
|---|---|---|---|---|
| | % $H_2O$ Content | Clarity | Wettability | DK (barrer) |
| 1* | 5.6 | Clear | C | - |
| 2 | 16.6 | Clear | B | 70.2 |
| 3 | 27.9 | Clear | B | - |
| 4 | 39.8 | Clear | A | 66.1 |
| 5 | 46.0 | Clear | A | 59.5 |
| 6 | 57.9 | Sl. Hazy | A | 45.2 |
| 7 | 79.0 | Opaque | A | 47.5 |

* not comprised by the present claims

As shown above water content increases with higher molecular weight PEG. Oxygen permeability however, decreases with the higher molecular weight PEG.

Example 3: This example illustrates how the clarity of polydimethyl siloxane/PEG hydrogels is affected by varying the proportion of solvent. Films are made as in example 1 except that the molecular weight of PEG is 1000 and the solvent used is isopropyl acetate (IPAC). Samples 6 and 8 are made as in example 1 with 50 % IPAC and are subsequently diluted to 60 and 75 % IPAC respectively prior to the addition of BME and UV irradiation. Samples 1 and 2 do not contain enough solvent to dissolve the reactants and, therefore, the synthesis is stopped prior to IEM addition and films are not made.

| Sample | Wt.% In the Polymerization Mixture | | | | | | Clarity |
|---|---|---|---|---|---|---|---|
| | $Z_1$ | IPDI | PEG | IEM | Solvent | BME | |
| 1 | 37.7 | 7.6 | 34.1 | - | 20.56 | - | (Not enough solvent to dissolve reactants, no films made) |
| 2 | 37.0 | 7.4 | 33.4 | - | 22.19 | - | Same as in sample 1 |
| 3 | 31.8 | 6.4 | 28.5 | 4.4 | 28.91 | 0.54 | Hazy |
| 4 | 26.7 | 5.4 | 24.2 | 3.8 | 40.04 | 0.50 | Slightly Hazy |
| 5 | 23.0 | 4.6 | 20.7 | 3.2 | 48.45 | 0.14 | Clear |
| 6 | 17.8 | 3.6 | 16.0 | 2.5 | 60.18 | 0.20 | Clear |
| 7 | 15.2 | 3.0 | 13.7 | 2.2 | 65.99 | 0.12 | Clear |
| 8 | 11.1 | 2.2 | 10.0 | 1.5 | 75.07 | 0.18 | Clear |

As shown above clarity increases with increased solvent concentration.

Example 4: This example shows the effect of comonomer addition of the physical properties of $Z_1$/PEG hydrogel films. Films are made as in example 3 (sample 5) except that a comonomer (N,N-dimethyl acrylamide, DMA; N-vinyl pyrrolidone, NVP; 2-hydroxyethyl methacrylate, HEMA; or methyl methacrylate, MMA) is added just prior to the addition of initiator.

| Sample | Wt.% In the Polymerization Mixture | | | | | | | |
|---|---|---|---|---|---|---|---|---|
| | $Z_1$ | IPDI | PEG | IEM | IPAC | Comonomer | BME | % $H_2O$ Content in Hydrogel |
| 1 | 21.8 | 4.4 | 19.7 | 3.0 | 45.9 | 5.2 MMA | 0.10 | 43.7 |
| 2 | 23.0 | 4.6 | 20.7 | 3.2 | 48.5 | 0 | 0.14 | 45.5 |
| 3 | 21.5 | 4.3 | 19.3 | 2.9 | 45.2 | 6.7 DMA | 0.13 | 50.0 |
| 4 | 21.8 | 4.4 | 19.6 | 3.0 | 45.8 | 5.5 NVP | 0.15 | 45.7 |
| 5 | 21.8 | 4.4 | 19.7 | 3.0 | 45.9 | 5.2 HEMA | 0.13 | 44.4 |

MMA = methylmethacrylate;
DMA = N,N-dimethylacrylamide;
NVP = N-vinylpyrrolidone;
HEMA = 2-hydroxyethyl methacrylate.

As shown above, addition of comonomers has little effect on wettability or clarity. All hydrogels are clear and have an A-wettability.

Example 5: This example compares the physical properties of $Z_1$/PEG hydrogel films made by combining PEG MW 1000 with lower molecular weight PEGs (200, 400 and 600) in various ratios. Except for sample 6, films are prepared as described in example 1 using isopropyl acetate (IPAC) as solvent and combining the molecular weight PEGs indicated below. Sample 6 is prepared by separately synthesis of $Z_1$/PEG 400 and $Z_1$/PEG 1000 according to example 1 using isopropyl acetate as solvent and then combining them prior to the addition of initiator and UV irradiation.

| Sample | Mole Ratio | Wt. % In the Polymerization Mixture | | | | | |
|---|---|---|---|---|---|---|---|
| | Low MW PEG:PEG 1000 | $Z_1$ | IPDI | PEG (MW) | IEM | IPAC | BME |
| 1 | 0.1 | 23.0 | 4.6 | 20.7 (1000) | 3.2 | 48.5 | 0.14 |
| 2 | PEG 400:PEG 1000<br>1:7 | 24.3 | 4.8 | 0.5 (200)<br>19.2 (1000) | 3.5 | 47.6 | 0.13 |

(continued)

| Sample | Mole Ratio | Wt. % In the Polymerization Mixture | | | | | |
|---|---|---|---|---|---|---|---|
| | Low MW PEG:PEG 1000 | $Z_1$ | IPDI | PEG (MW) | IEM | IPAC | BME |
| 3 | PEG 400:PEG 1000 1:9 | 23.8 | 4.7 | 0.8 (400) 19.3 (1000) | 3.3 | 48.0 | 0.14 |
| 4 | PEG 400:PEG 1000 1:3 | 24.2 | 4.9 | 2.2 (400) 16.5 (1000) | 3.4 | 48.8 | 0.14 |
| 5 | PEG 400:PEG 1000 1:1.5 | 25.5 | 5.1 | 3.7 (400) 13.8 (1000) | 3.7 | 48.2 | 0.16 |
| 6 | PEG 400:PEG 1000 1:1.5 | 25.7 | 5.1 | 3.7 (400) 12.9 (1000) | 3.6 | 49.0 | 0.13 |
| 7 | PEG 600:PEG 1000 1:3 | 24.0 | 4.8 | 3.3 (600) 16.2(1000) | 3.4 | 48.3 | 0.18 |

| Sample | Physical Properties of Hydrogel | | | |
|---|---|---|---|---|
| | % $H_2O$ Content | Clarity | Wettability | Strength |
| 1 | 45.4 | Clear | A | 3 |
| 2 | 39.9 | Clear | A | 4 |
| 3 | 41.5 | Clear | A | 3 |
| 4 | 38.2 | Clear | A | 2 |
| 5 | 33.4 | Clear | A | 2-3 |
| 6 | 39.8 | Clear | A | 3-4 |
| 7 | 38.5 | Clear | A | 4 |

The results show that incorporation of low molecular weight PEGs decreases water content but maintains clarity and wettability of the resultant films.

Example 6: This example demonstrates the effect of initiator level on the physical properties of $Z_1$/PEG hydrogel films with similar compositions. The films are prepared as described in example 3 (sample 5).

| Sample | Wt. % In the Polymerization Mixture | | | | | |
|---|---|---|---|---|---|---|
| | $Z_1$ | IPDI | PEG | IEM | IPAC | BME |
| 1 | 23.0 | 4.6 | 20.8 | 3.2 | 48.4 | 0.04 |
| 2 | 22.9 | 4.6 | 20.7 | 3.2 | 48.6 | 0.08 |
| 3 | 23.1 | 4.6 | 20.7 | 3.1 | 48.4 | 0.12 |
| 4 | 23.0 | 4.6 | 20.7 | 3.2 | 48.5 | 0.14 |
| 5 | 23.0 | 4.6 | 20.8 | 3.2 | 48.4 | 0.14 |
| 6 | 22.9 | 4.6 | 20.7 | 3.2 | 48.6 | 0.16 |
| 7 | 22.9 | 4.6 | 20.7 | 3.2 | 48.6 | 0.47 |
| 8 | 23.0 | 4.6 | 20.8 | 3.2 | 48.4 | 0.49 |
| 9 | 22.9 | 4.6 | 20.7 | 3.2 | 48.6 | 0.79 |
| 10 | 23.0 | 4.6 | 20.8 | 3.2 | 48.4 | 0.81 |

| Sample | Physical Properties of Hydrogel | | | |
|---|---|---|---|---|
| | % $H_2O$ | Clarity | Wettability | Strength |
| 1 | 45.4 | Clear | A | 4 |
| 2 | 43.4 | Clear | A | 4 |
| 3 | 46.4 | Clear | A | 3 |

(continued)

| Sample | Physical Properties of Hydrogel | | | |
|---|---|---|---|---|
| | % $H_2O$ | Clarity | Wettability | Strength |
| 4 | 45.5 | Clear | A | 3 |
| 5 | 46.3 | Clear | A | 3-4 |
| 6 | 42.7 | Clear | A | 3-4 |
| 7 | 45.7 | Clear | A | 2 |
| 8 | 45.9 | Clear | A | 2 |
| 9 | 48.0 | Clear | A | 2 |
| 10 | 43.8 | Clear | A | 2 |

As shown above, increasing initiator level to at least 0.47 % improves the strength of the resultant hydogels.

Example 7: This example shows the effect of chain extension of the polydimethyl siloxane ($Z_1$), prior to synthesis of the diadduct, on the resultant hydrogels.

3.0068 g (0.0014 mole) Shin-Etsu X-61-504A (1000) (MW 2212) are combined with 0.1512 g (0.0007 mole) IPDI and 0.5 microliters of DBTL and stirred overnight at room temperature. IR indicates complete reaction of the isocyanate functionality. This chain extended $Z_1$ is subsequently capped with IPDI and PEG as described in example 1 using PEG 1000 except for (sample 3). Sample 3 is heated at 50°C for 72 hours, (rather than overnight) during the reaction with PEG. The calculated amount of IEM is then added to form $(Z_1\text{-IPDI-}Z_1)(\text{IPDI-PEG-IEM})_2$. The IEM is reacted at room temperature overnight with stirring except for sample 1 which is heated at 35°C.

| Sample | Wt.% In the Polymerization Mixture | | | | | |
|---|---|---|---|---|---|---|
| | $Z_1$ | IPDI | PEG 1000 | IEM | Solvent | BME |
| 1 | 25.6 | 3.8 | 11.6 | 1.8 | 57.1 (1) | 0.12 |
| 2 | 30.1 | 4.6 | 13.6 | 2.1 | 49.6 (2) | 0.14 |
| 3 | 24.4 | 3.7 | 11.1 | 1.8 | 59.0 (2) | 0.16 |
| 4 | 30.4 | 4.6 | 13.5 | 2.1 | 49.4 (3) | 0.10 |
| solvents:(1) = isopropyl acetate; (2) = acetone, (3) = methyl ethyl ketone. | | | | | | |

| Sample | Physical Properties of Hydrogel | | | | |
|---|---|---|---|---|---|
| | % $H_2O$ Content | Clarity | Wettability | Strength | DK (barrer) |
| 1 | 40.8 | Opaque | A | 1-2 | 71.0 |
| 2 | 36.4 | Hazy | A | 1-2 | 105.2 |
| 3 | 43.1 | Very Sl. Hazy | A | 1-2 | - |
| 4 | 37.8 | Hazy | A | 1-2 | 103.5 |

Example 8: This example demonstrates the fabrication of prototype polydimethylsiloxane/polyether lenses from polypropylene contact lens molds. The reaction solution is made as in example 3 (sample 5) using Shin-Etsu X-61-504A (1000) MW = 2400 and 0.78 % BME. The solution is pipetted into the lens molds and UV cured for 3 hours. After extraction in water and boiling, optically clear, strong lenses are obtained. Micromechanical tensile tests performed on the lenses yield the following properties; stress of 3.2 kg/$cm^2$, Young's modulus 15.9 kg/$cm^2$ and a 25 % elongation.

**Claims**

**Claims for the following Contracting States : AT, BE, CH, DE, DK, FR, GB, GR, IT, LI, LU, NL, SE**

**1.** A polymer fabricated from one or more macromers of the formula

$$Cap_1\text{-}Grp_1\text{-}Cap_1 \qquad \text{(IIIa)}$$

wherein $Cap_1$ is represented by the formulae

$$R_{16}(L_4)_z(R_6)_w(A_1)_V(L_3)_x\text{—} \qquad \textbf{(VIa)}$$

or

$$R_{17}(L_4)_z(R_6)_w(A_1)_V(L_3)_x\text{—} \qquad \textbf{(VIIa)},$$

$Grp_1$ is represented by the formula

$$\text{—}(R_{15}\text{-}A\text{-}(L)_h)_a\text{-}Seg_1\text{-}((L)_h\text{-}R_{14}\text{-}Sil)_e\text{—} \qquad \textbf{(IIa)}$$

and wherein $Seg_1$ is represented by the formula

$$\{R_{14}\text{-}Sil\text{-}(L)_h\text{-}R_{15}\text{-}A\} \qquad \text{(Ia)}$$

wherein the variables have the following meaning:

$R_{14}$ is a bond, -N($R_1$)-, or -O-;
$R_{15}$ is -O- or -N($R_1$)-;
$R_1$ is hydrogen, $C_{1-4}$alkyl, or phenyl;
h is 1, or h may be zero when the atom of Sil to which it would otherwise be attached is carbon; provided that at least one h is different from zero;
each Sil is independently of the formula

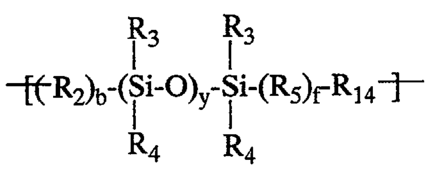

**(IV)**

each L is independently of the formula

$$\text{-}L_1R_6L_2\text{-}$$

and each A is independently of the formula

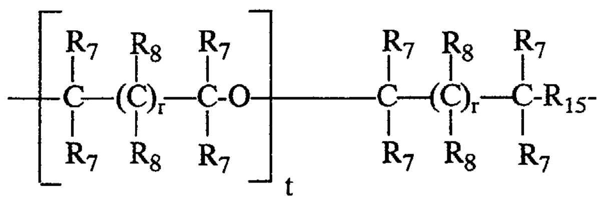 (V)

wherein within formula IV each $R_2$ and each $R_5$ is independently branched $C_{3-7}$alkylene, carbonyl, $C_{1-6}$alkylene carbonyl, $C_{1-4}$alkylene-(oxy-$C_{1-4}$alkylene)$_g$- or
$C_{1-4}$alkylene-$OCH_2$-(hydroxy $C_{1-4}$alkylene)-$CH_2$-;
with g being an integer of from 1 to 10;
each b and each f is 1;
each y is independently 1 to 200;
and each $R_3$ and each $R_4$ is independently selected from $C_{1-18}$alkyl and aryl of up to 12 carbon atoms;
and within L:
each $L_1$ and $L_2$ is independently

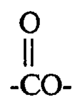 or 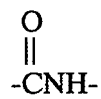

in which the oxygen or nitrogen is bound to $R_6$, or

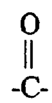

or a bond; and
each $R_6$ is independently

(i) -($C_{1-25}$aliphatic)- or
(ii) a group of the formula

$$-(C_{1-20}\text{aliphatic})_j\text{-}Q_k\text{-}[(\text{5-7 membered cycloaliphatic or aryl of up to 25 carbon atoms})\text{-}$$

$$Q_{(k1)}\text{-}(C_{1-20}\text{aliphatic})_{(j1)}]_D\text{-} \qquad \text{(IX)},$$

each of j, k, k1 and j1 being independently zero or one, but if j is 0, then k is 0 and if jl is 0, then kl is 0;
each D is 1 to 3;
each aliphatic group in the $R_6$ (i) or (ii) above is uninterrupted or interrupted at any point by Q;
each aliphatic, cycloaliphatic, and aryl group within the $R_6$ (i) or (ii) above is unsubstituted or substituted by one or more substituents which substituents are halogen, hydroxy, $C_{1-4}$alkyl, carboxy or $C_{1-12}$perhaloalkyl;
each Q is independently selected from -O-,

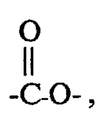, 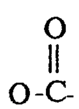, 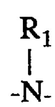, 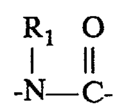, 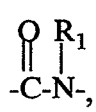,

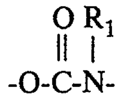, 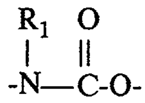, 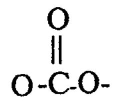, and 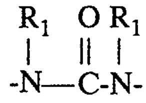;

and within formula V:
each r is independently 0-4;
each t is independently 3-200; and
each $R_7$ is independently selected from groups i) and iii) below and each $R_8$ is independently selected from groups i)-iv) below:

i) hydrogen, halogen, unsubstituted $C_{1-16}$alkyl, substituted $C_{1-16}$alkyl, unsubstituted $C_{2-16}$alkenyl, and substituted $C_{2-16}$alkenyl, wherein a) the substituents on the alkyl and alkenyl groups in i) are independently selected from fluoro, $C_{1-16}$alkoxy, $C_{2-16}$-alkanoyloxy, $C_{1-16}$alkoxy-C(O)-, $C_{2-16}$alkenyloxy-C(O)-, $C_{3-16}$alkenoyloxy, aryl of up to 10 carbon atoms, aryloxy of up to 10 carbon atoms, aroyl of up to 11 carbon atoms, aroyloxy of up to 11 carbon atoms, aryl (of up to 10 carbon atoms)-oxycarbonyl, $C_{3-8}$cycloalkyl, $C_{3-8}$cycloalkoxy, ($C_{3-8}$cycloalkyl)-carbonyloxy, ($C_{3-8}$cycloalkoxy)carbonyl, oxacycloalkyl of up to 7 carbon atoms, oxacycloalkoxy of up to 7 carbon atoms, oxacycloalkoxy (of up to 7 carbon atoms)-carbonyl, and oxacycloalkyl (of up to 7 carbon atoms)-carbonyloxy; and b) each alkyl and alkenyl group in a) being unsubstituted or further substituted by fluoro, $C_{1-6}$alkyl, or $C_{1-6}$alkoxy provided that said last mentioned alkoxy is not bound to a carbon already singly bound to another oxygen atom; and
ii) $C_{1-16}$alkoxy, $C_{2-16}$alkanoyloxy, $C_{1-16}$alkoxy-C(O)-, $C_{2-16}$alkenyloxy-C(O)- and $C_{3-16}$-alkenoyloxy, each of which may be further substituted by fluoro, aryl of up to 10 carbon atoms, or $C_{1-6}$alkoxy provided that the last mentioned alkoxy is not bound to a carbon atom which is singly bound to another oxygen;
iii) aryl of up to 10 carbon atoms, $C_{3-8}$cycloalkyl, and oxacycloalkyl of up to 7 carbon atoms, each of which is unsubstituted or substituted by a substituent selected from those indicated in i)a) and b) above;
iv) aryloxy of up to 10 carbon atoms, cycloalkoxy of up to 8 carbons, cycloalkyl (of up to 8 carbons)-C(O)O-, cycloalkoxy (of up to 8 carbons)-carbonyl, aroyloxy of up to 11 carbons, oxacycloalkoxy of up to 7 carbons, oxacycloalkenyloxy of up to 7 carbons, oxacycloalkoxy (of up to 7 carbon atoms)-carbonyl, oxacycloalkyl (of up to 7 carbon atoms)-carbonyloxy, aryloxy of up to 11 carbon atoms, and aroyloxy of up to 11 carbon atoms, each of which is unsubstituted or substituted by fluoro, $C_{1-6}$alkyl, or $C_{1-6}$alkoxy, provided said last mentioned alkoxy is not bound to a carbon atom which is singly bound to another oxygen;
and 2 adjacent groups $R_7$ and $R_8$, together with the atoms to which they are attached may define a 5-8 membered cycloalkyl, cycloalkenyl, or oxacycloalkyl ring or a 6-14 membered bicyclo-ring,

a and e are each zero or 1, but a plus e is 1,
each w, x and z is independently zero or 1, but if w is zero, then one of x and z must be zero;
each V is independently zero or 1;
each $A_1$ is independently of the formula

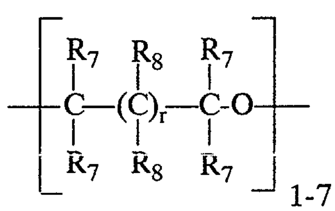 ;

each $L_3$ is independently

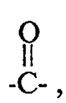, 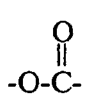, 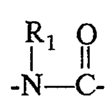

with the right hand portion attached to $Grp_1$ provided that the $Grp_1$ atom to which $L_3$ is attached is not a carbonyl

carbon, an amido nitrogen or a carboxy oxygen and $L_3$ is -O- or $-NR_1-$ when such $Grp_1$ atom is a carbonyl carbon;
each $L_4$ is independently

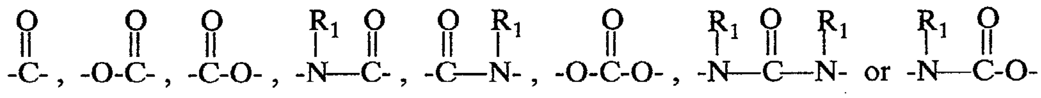

when w is one, and selected from the same group as $L_3$ when w is zero; each $R_{16}$ is independently of the formula

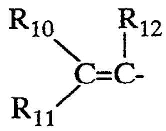

(VIII)

in which $R_{12}$ is hydrogen or $C_{1-7}$alkyl and each of $R_{10}$ and $R_{11}$ is independently hydrogen, $C_{1-7}$alkyl, or $-COOR_{13}$ with $R_{13}$ being hydrogen or $C_{1-4}$alkyl;
and $R_{17}$ is selected from

a) H, $NH_2$, OH, -NCO, -NCS, -C(O)-halogen and $COOR_{12}$ when the non-$R_{17}$ atom to which it is attached is a non-carbonyl saturated carbon or the non-$R_{17}$ atom to which it is attached is a carbon which is part of a ring;

b) H, -C(O)-halogen, $-C(O)-R_{12}$, $-C(O)-OR_{12}$ and $R_{12}$ when the non-$R_{17}$ atom to which it is attached is an oxygen other than a carboxy oxygen;

c) H and $R_{12}$, when the non-$R_{17}$ atom to which it is attached is a carboxy oxygen;

d) $-C(O)-R_{12}$, $-C(O)-OR_{12}$, $-C(O)N(R_1)R_{12}$ and $R_{12}$ when the non-$R_{17}$ atom to which it is attached is an amino nitrogen, or $R_{12}$ when the non-$R_{17}$ atom to which it is attached is an amido nitrogen;

e) OH, $R_{12}$, $CH_2C(O)R_{12}$, $CH_2C(O)OR_{12}$, $NH_2$, and $-NHR_{12}$ when the non-$R_{17}$ atom to which it is attached is a carboxy carbon; and

f) H, OH, hal, $-OR_{12}$ when the non-$R_{17}$ atom to which it is attached is silicon;

said polymer having in its fully swollen state a water content of at least 10 % by weight.

2. A polymer according to claim 1 wherein at least 30 % of the A blocks within a macromer of formula IIIa are homopolymeric for not more than 15 repeating units.

3. A polymer according to claim 1 wherein h is one.

4. A polymer according to claim 1 wherein $Cap_1$ is of formula VIa.

5. A polymer according to claim 4 wherein $R_{16}$ in formula Via is of formula VIII wherein each of $R_{10}$ - $R_{12}$ is independently hydrogen or methyl.

6. A polymer according to claim 1 of formula (IIIa) wherein $Cap_1$ is represented by the formula

$$R_{16}(L_4)_z(R_6)_w(A_1)_V(L_3)_x\!-\!\!- \qquad \text{(VIa)}$$

wherein $R_{16}$ is of formula VIII as defined in claim 1 wherein each of $R_{10}$ - $R_{12}$ is independently hydrogen or methyl,

V is zero,
and wherein the other variables have the meaning as defined in claim 1.

**7.** A polymer according to claim 1 wherein

Sil is

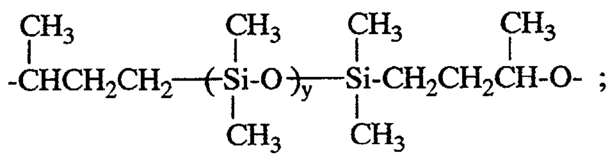

a is one;
e is zero;
$R_{14}$ and $R_{15}$ are each -O-;
L is

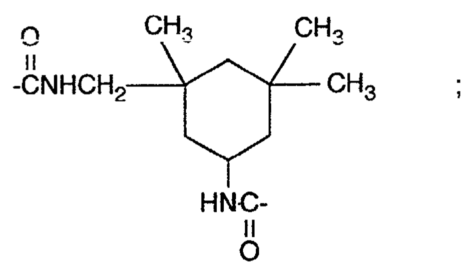

h is one;
A is $(CH_2CH_2O)_t$; and
$Cap_1$ is

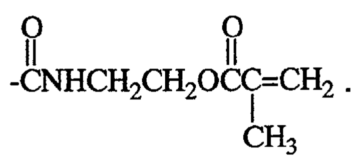

**8.** A polymer according to claim 2 wherein all the variables have the meaning as in claim 7.

**9.** A polymer according to claim 1 being a copolymer of at least 10 % by weight of one or more macromers of formula IIIa as defined in claim 1 and at least one copolymerizable monomer which is not a macromer of formula IIIa as defined in claim 1, having in its fully swollen state a water content of at least 10 % by weight.

**10.** A polymer according to claim 2 being a copolymer of one or more macromers of formula IIIa as defined in claim 2 and at least one copolymerizable monomer which is not a macromer of formula IIIa as defined in claim 2, having in its fully swollen state a water content of at least 10 % by weight.

**11.** A polymer according to claim 7 or 8 being a copolymer of one or more macromers as defined in claim 7 or 8 and at least one copolymerizable monomer which is not a macromer as defined in claim 7 or 8, having in its fully swollen state a water content of at least 10 % by weight.

**12.** An ophthalmic device comprising an optically clear polymer of claim 1 or 2.

**13.** An ophthalmic device comprising an optically clear polymer of claim 7 or 8.

**14.** An ophthalmic device comprising an optically clear polymer of claim 9 or 10.

**15.** An ophthalmic device comprising an optically clear polymer of claim 11.

**16.** The ophthalmic device of any of claims 12 or 14 which is a contact lens.

**17.** The ophthalmic device of any of claims 13 or 15 which is a contact lens.

**Claims for the following Contracting State : ES**

**1.** A process for the manufacture of a polymer from one or more macromers of the formula

$$Cap_1\text{-}Grp_1\text{-}Cap_1 \qquad \text{(IIIa)}$$

wherein $Cap_1$ is represented by the formulae

$$R_{16}(L_4)_z(R_6)_w(A_1)_V(L_3)_x- \qquad \text{(VIa)}$$

or

$$R_{17}(L_4)_z(R_6)_w(A_1)_V(L_3)_x- \qquad \text{(VIIa),}$$

$Grp_1$ is represented by the formula

$$-(R_{15}\text{-}A\text{-}(L)_h)_a\text{-}Seg_1\text{-}((L)_h\text{-}R_{14}\text{-}Sil)_e- \qquad \text{(IIa)}$$

and wherein $Seg_1$ is represented by the formula

$$\{R_{14}\text{-}Sil\text{-}(L)_h\text{-}R_{15}\text{-}A\} \qquad \text{(Ia)}$$

wherein the variables have the following meaning:

$R_{14}$ is a bond, -N($R_1$)-, or -O-;
$R_{15}$ is -O- or -N($R_1$)-;
$R_1$ is hydrogen, $C_{1-4}$alkyl, or phenyl;
h is 1, or h may be zero when the atom of Sil to which it would otherwise be attached is carbon; provided that at least one h is different from zero;
each Sil is independently of the formula

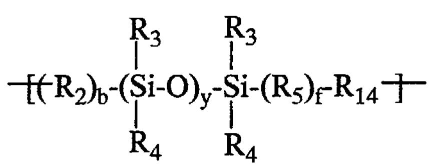

(IV)

each L is independently of the formula

$-L_1R_6L_2-$

and each A is independently of the formula

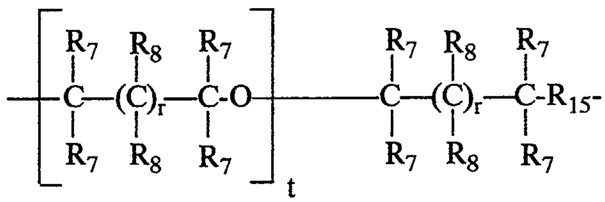

(V)

wherein within formula IV each $R_2$ and each $R_5$ is independently branched $C_{3-7}$alkylene, carbonyl, $C_{1-6}$alkylene carbonyl, $C_{1-4}$alkylene-(oxy-$C_{1-4}$alkylene)$_g$- or $C_{1-4}$alkylene-$OCH_2$-(hydroxy $C_{1-4}$alkylene)-$CH_2$-;
with g being an integer of from 1 to 10;
each b and each f is 1;
each y is independently 1 to 200;
and each $R_3$ and each $R_4$ is independently selected from $C_{1-18}$alkyl and aryl of up to 12 carbon atoms;
and within L:
each $L_1$ and $L_2$ is independently

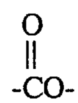 or 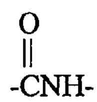

in which the oxygen or nitrogen is bound to $R_6$, or

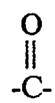

or a bond; and
each $R_6$ is independently

(i) -($C_{1-25}$aliphatic)- or
(ii) a group of the formula

$$-(C_{1-20}\text{aliphatic})_j-Q_k-[(\text{5-7 membered cycloaliphatic or aryl of up to 25 carbon atoms})-$$

$$Q_{(k1)}-(C_{1-20}\text{aliphatic})_{(j1)}]_D- \qquad \text{(IX)},$$

each of j, k, k1 and j1 being independently zero or one, but if j is 0, then k is 0 and if j1 is 0, then k1 is 0;
each D is 1 to 3;
each aliphatic group in the $R_6$ (i) or (ii) above is uninterrupted or interrupted at any point by Q;
each aliphatic, cycloaliphatic, and aryl group within the $R_6$ (i) or (ii) above is unsubstituted or substituted by one or more substituents which substituents are halogen, hydroxy, $C_{1-4}$alkyl, carboxy or $C_{1-12}$perhaloalkyl;
each Q is independently selected from -O-,

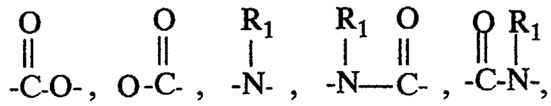

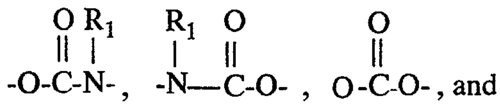 and 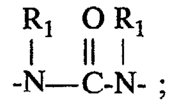

and within formula V:
each r is independently 0-4;
each t is independently 3-200; and
each $R_7$ is independently selected from groups i) and iii) below and each $R_8$ is independently selected from groups i)-iv) below:

i) hydrogen, halogen, unsubstituted $C_{1-16}$alkyl, substituted $C_{1-16}$alkyl, unsubstituted $C_{2-16}$alkenyl, and substituted $C_{2-16}$alkenyl, wherein a) the substituents on the alkyl and alkenyl groups in i) are independently selected from fluoro, $C_{1-16}$alkoxy, $C_{2-16}$-alkanoyloxy, $C_{1-16}$alkoxy-C(O)-, $C_{2-16}$alkenyloxy-C(O)-, $C_{3-16}$alkenoyloxy, aryl of up to 10 carbon atoms, aryloxy of up to 10 carbon atoms, aroyl of up to 11 carbon atoms, aroyloxy of up to 11 carbon atoms, aryl (of up to 10 carbon atoms)-oxycarbonyl, $C_{3-8}$cycloalkyl, $C_{3-8}$cycloalkoxy, ($C_{3-8}$cycloalkyl)-carbonyloxy, ($C_{3-8}$cycloalkoxy)carbonyl, oxacycloalkyl of up to 7 carbon atoms, oxacycloalkoxy of up to 7 carbon atoms, oxacycloalkoxy (of up to 7 carbon atoms)-carbonyl, and oxacycloalkyl (of up to 7 carbon atoms)-carbonyloxy; and b) each alkyl and alkenyl group in a) being unsubstituted or further substituted by fluoro, $C_{1-6}$alkyl, or $C_{1-6}$alkoxy provided that said last mentioned alkoxy is not bound to a carbon already singly bound to another oxygen atom; and
ii) $C_{1-16}$alkoxy, $C_{2-16}$alkanoyloxy, $C_{1-16}$alkoxy-C(O)-, $C_{2-16}$alkenyloxy-C(O)- and $C_{3-16}$-alkenoyloxy, each of which may be further substituted by fluoro, aryl of up to 10 carbon atoms, or $C_{1-6}$alkoxy provided that the last mentioned alkoxy is not bound to a carbon atom which is singly bound to another oxygen;
iii) aryl of up to 10 carbon atoms, $C_{3-8}$cycloalkyl, and oxacycloalkyl of up to 7 carbon atoms, each of which is unsubstituted or substituted by a substituent selected from those indicated in i)a) and b) above;
iv) aryloxy of up to 10 carbon atoms, cycloalkoxy of up to 8 carbons, cycloalkyl (of up to 8 carbons)-C(O) O-, cycloalkoxy (of up to 8 carbons)-carbonyl, aroyloxy of up to 11 carbons, oxacycloalkoxy of up to 7 carbons, oxacycloalkenyloxy of up to 7 carbons, oxacycloalkoxy (of up to 7 carbon atoms)-carbonyl, oxacycloalkyl (of up to 7 carbon atoms)-carbonyloxy, aryloxy of up to 11 carbon atoms, and aroyloxy of up to 11 carbon atoms, each of which is unsubstituted or substituted by fluoro, $C_{1-6}$alkyl, or $C_{1-6}$alkoxy, provided said last mentioned alkoxy is not bound to a carbon atom which is singly bound to another oxygen;
and 2 adjacent groups $R_7$ and $R_8$, together with the atoms to which they are attached may define a 5-8 membered cycloalkyl, cycloalkenyl, or oxacycloalkyl ring or a 6-14 membered bicyclo-ring,
a and e are each zero or 1, but a plus e is 1,
each w, x and z is independently zero or 1, but if w is zero, then one of x and z must be zero;
each V is independently zero or 1;
each $A_1$ is independently of the formula

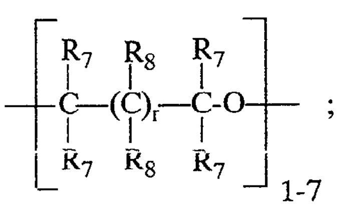 ;

each $L_3$ is independently

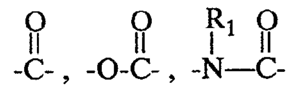

with the right hand portion attached to $Grp_1$ provided that the $Grp_1$ atom to which $L_3$ is attached is not a carbonyl carbon, an amido nitrogen or a carboxy oxygen and $L_3$ is -O- or $-NR_1-$ when such $Grp_1$ atom is a carbonyl carbon;
each $L_4$ is independently

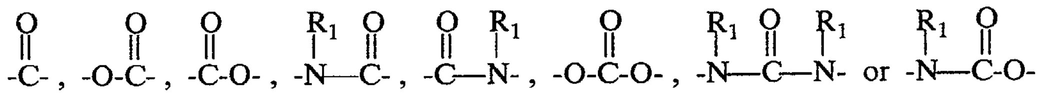

or

when w is one, and selected from the same group as $L_3$ when w is zero; each $R_{16}$ is independently of the formula

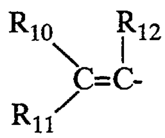

(VIII)

in which $R_{12}$ is hydrogen or $C_{1-7}$alkyl and each of $R_{10}$ and $R_{11}$ is independently hydrogen, $C_{1-7}$alkyl, or $-COOR_{13}$ with $R_{13}$ being hydrogen or $C_{1-4}$alkyl;
and $R_{17}$ is selected from

a) H, $NH_2$, OH, -NCO, -NCS, -C(O)-halogen and $COOR_{12}$ when the non-$R_{17}$ atom to which it is attached is a non-carbonyl saturated carbon or the non-$R_{17}$ atom to which it is attached is a carbon which is part of a ring;

b) H, -C(O)-halogen, $-C(O)-R_{12}$, $-C(O)-OR_{12}$ and $R_{12}$ when the non-$R_{17}$ atom to which it is attached is an oxygen other than a carboxy oxygen;

c) H and $R_{12}$, when the non-$R_{17}$ atom to which it is attached is a carboxy oxygen;

d) $-C(O)-R_{12}$, $-C(O)-OR_{12}$, $-C(O)N(R_1)R_{12}$ and $R_{12}$ when the non-$R_{17}$ atom to which it is attached is an amino nitrogen, or $R_{12}$ when the non-$R_{17}$ atom to which it is attached is an amido nitrogen;

e) OH, $R_{12}$, $CH_2C(O)R_{12}$, $CH_2C(O)OR_{12}$, $NH_2$, and $-NHR_{12}$ when the non-$R_{17}$ atom to which it is attached is a carboxy carbon; and

f) H, OH, hal, $-OR_{12}$ when the non-$R_{17}$ atom to which it is attached is silicon;

said polymer having in its fully swollen state a water content of at least 10 % by weight, wherein the macromer is polymerized in a manner known per se.

**2.** A process according to claim 1 wherein at least 30 % of the A blocks within a macromer of formula IIIa are homopolymeric for not more than 15 repeating units.

**3.** A process according to claim 1 wherein h is one.

**4.** A process according to claim 1 wherein $Cap_1$ is of formula VIa.

**5.** A process according to claim 4 wherein $R_{16}$ in formula VIa is of formula VIII wherein each of $R_{10}$ - $R_{12}$ is independently hydrogen or methyl.

6. A process according to claim 1 wherein $Cap_1$ is represented by the formula

$$R_{16}(L_4)_z(R_6)_w(A_1)_V(L_3)_x \text{—} \qquad (VIa)$$

wherein $R_{16}$ is of formula VIII as defined in claim 1 wherein each of $R_{10}$ - $R_{12}$ is independently hydrogen or methyl,
V is zero,
and wherein the other variables have the meaning as defined in claim 1.

7. A process according to claim 1 wherein

Sil is

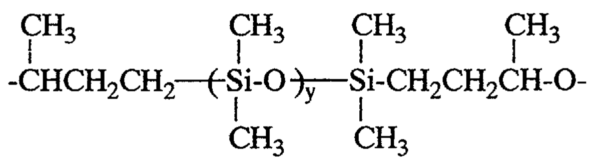 ;

a is one;
e is zero;
$R_{14}$ and $R_{15}$ are each -O-;
L is

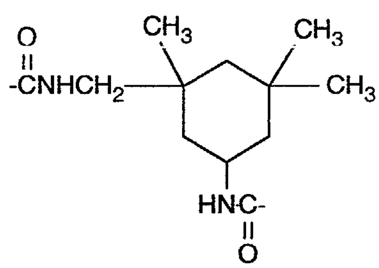 ;

h is one;
A is $(CH_2CH_2O)_t$; and
$Cap_1$ is

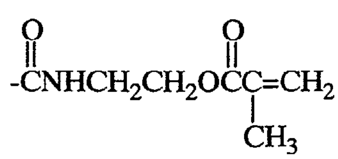 .

8. A process according to claim 2 wherein all the variables have the meaning as in claim 7.

9. A process for the manufacture of a polymer according to claim 1 being a copolymer of at least 10 % by weight of one or more macromers of formula IIIa as defined in claim 1 and at least one copolymerizable monomer which is not a macromer of formula IIIa as defined in claim 1, having in its fully swollen state a water content of at least 10 % by weight, wherein the components are copolymerized in a manner known per se.

10. A process for the manufacture of a polymer according to claim 2 being a copolymer of one or more macromers of formula IIIa as defined in claim 2 and at least one copolymerizable monomer which is not a macromer of formula

IIIa as defined in claim 2, having in its fully swollen state a water content of at least 10 % by weight, wherein the components are copolymerized in a manner known per se.

**11.** A process for the manufacture of a polymer according to claim 7 or 8 being a copolymer of one or more macromers of formula IIIa as defined in claim 7 or 8 and at least one copolymerizable monomer which is not a macromer of formula IIIa as defined in claim 7 or 8, having in its fully swollen state a water content of at least 10 % by weight, wherein the components are copolymerized in a manner known per se.

**12.** An ophthalmic device comprising an optically clear polymer the manufacture of which is disclosed in claim 1 or 2.

**13.** An ophthalmic device comprising an optically clear polymer the manufacture of which is disclosed in claim 7 or 8.

**14.** An ophthalmic device comprising an optically clear polymer the manufacture of which is disclosed in claim 9 or 10.

**15.** An ophthalmic device comprising an optically clear polymer the manufacture of which is disclosed in claim 11.

**16.** The ophthalmic device of any of claims 12 or 14 which is a contact lens.

**17.** The ophthalmic device of any of claims 13 or 15 which is a contact lens.

**Patentansprüche**

**Patentansprüche für folgende Vertragsstaaten : AT, BE, CH, DE, DK, FR, GB, GR, IT, LI, LU, NL, SE**

**1.** Polymer aus einem oder mehreren Makromeren der Formel

$$Cap_1\text{-}Grp_1\text{-}Cap_1 \qquad \text{(IIIa)}$$

hergestellt, wobei $Cap_1$ durch die folgenden Formeln dargestellt ist

$$R_{16}(L_4)_z(R_6)_w(A_1)_v(L_3-)_x- \qquad \text{(VIa)}$$

oder

$$R_{17}(L_4)_z(R_6)_w(A_1)_v(L_3-)_x- \qquad \text{(VIIa),}$$

$Grp_1$ durch die folgende Formel dargestellt ist

$$-(R_{15}\text{-}A\text{-}(L)_h)_a\text{-}Seg_1\text{-}((L)_h\text{-}R_{14}\text{-}Sil-)_e- \qquad \text{(IIa)}$$

und wobei $Seg_1$ durch die folgende Formel dargestellt ist

$$\{R_{14}\text{-}Sil\text{-}(L)_h\text{-}R_{15}\text{-}A\} \qquad \text{(Ia)}$$

wobei die Variablen die folgende Bedeutung haben:

$R_{14}$ ist eine Bindung, $-N(R_1)-$ oder -O-,

$R_{15}$ ist -O- oder $-N(R_1)-$,
$R_1$ ist Wasserstoff, $C_{1-4}$-Alkyl oder Phenyl,
h ist 1 oder h kann Null sein, wenn das Atom von Sil, mit dem es andernfalls verbunden wäre, Kohlenstoff ist, mit der Maßgabe, daß mindestens ein h nicht Null ist,
jedes Sil unabhängig die Formel

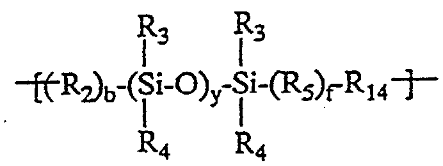

(IV)

aufweist, wobei jedes L unabhängig die Formel $-L_1R_6L_2-$ aufweist, und jedes A unabhängig die Formel

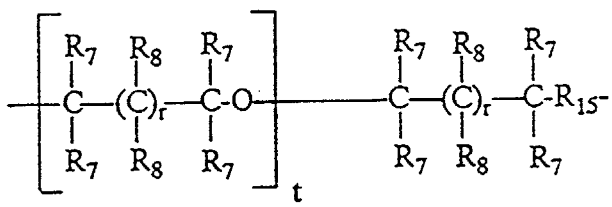

(V)

aufweist, wobei in der Formel IV jedes $R_2$ und jedes $R_5$ unabhängig verzweigtes $C_{3-7}$-Alkylen, Carbonyl, $C_{1-6}$Alkylencarbonyl, $C_{1-4}$Alyklen-(oxy-$C_{1-4}$-alkylen)$_g$- oder $C_{1-4}$Alkylen-$OCH_2$-(hydroxy-$C_{1-4}$alkylen)-$CH_2$- ist, wobei g eine ganze Zahl von 1 bis 10 ist,
jedes b und jedes f1 ist,
jedes y unabhängig 1-200 ist,
und wobei jedes $R_3$ und jedes $R_4$ unabhängig ausgewählt ist unter $C_{1-18}$-Alkyl und Aryl von bis zu 12 Kohlenstoffatomen,
und wobei in L:
jedes $L_1$ und $L_2$ unabhängig -CO-O- oder -CO-NH- ist, wobei der Sauerstoff oder Stickstoff an $R_6$ gebunden ist, oder -CO- oder eine Bindung ist, und
wobei jedes $R_6$ unabhängig ist

(i) -($C_{1-25}$aliphatisch)-, oder
(ii) eine Gruppe der Formel

$$-(C_{1-20}\text{aliphatisch})_j\text{-}Q_k\text{-[(cycloaliphatisch mit 5-7 Atomen oder Aryl von bis zu 25 Kohlenstoffatomen)-}Q_{(k1)}\text{-}(C_{1-20}\text{aliphatisch})_{(j1)}]_D\text{-} \qquad (IX),$$

wobei jeder von j, k, k1 und j1 unabhängig Null oder Eins ist, jedoch wenn j 0 ist, dann ist k 0 und wenn j1 0 ist dann ist kl 0,
jedes D 1 bis 3 ist,
jede aliphatische Gruppe in $R_6$ von (i) oder (ii) vorstehend durchgehend ist oder an irgendeinem Punkt durch Q unterbrochen ist,
jede aliphatische-, cycloaliphatische- und Aryl-Gruppe in $R_6$ von (i) oder (ii) vorstehend nicht-substituiert oder substituiert ist mit einem oder mehreren Substituenten, welche Halogen, Hydroxy, $C_{1-4}$Alkyl, Carboxy oder $C_{1-12}$-Perhalogenalkyl sind,
jedes Q unabhängig ausgewählt ist unter -O-, -CO-O-, O-CO-, $-NR_1-$, $-NR_1$-CO-, -CO $-NR_1-$, -O-CO-$NR_1$-, $-NR_1$-CO-O-, O-CO-O- und $-NR_1$-CO-$NR_1$-,
und in Formel V:
jedes r unabhängig 0-4 ist,

jedes t unabhängig 3-200 ist und
jedes $R_7$ unabhängig ausgewählt ist unter den nachstehenden Gruppen i) und iii) und jedes $R_8$ unabhängig ausgewählt ist unter den nachstehenden Gruppen i)-iv):

i) Wasserstoff, Halogen, nicht-substituiertes $C_{1-16}$-Alkyl, substituiertes $C_{1-16}$-Alkyl, nicht-substituiertes $C_{2-16}$-Alkenyl und substituiertes $C_{2-16}$-Alkenyl, wobei a) die Substituenten an den Alkyl- und Alkenyl-Gruppen in i) unabhängig ausgewählt sind unter Fluor, $C_{1-16}$-Alkoxy, $C_{2-16}$-Alkanoyloxy, $C_{1-16}$-Alkoxy-C(O)-, $C_{2-16}$-Alkenyloxy-C(O)-, $C_{3-16}$-Alkenoyloxy, Aryl von bis zu 10 Kohlenstoffatomen, Aryloxy von bis zu 10 Kohlenstoffatomen, Aroyl von bis zu 11 Kohlenstoffatomen, Aroyloxy von bis zu 11 Kohlenstoffatomen, Aryl (von bis zu 10 Kohlenstoffatomen)-oxycarbonyl, $C_{3-8}$-Cycloalkyl, $C_{3-8}$-Cycloalkoxy, ($C_{3-8}$-Cycloalkyl)-carbonyloxy, ($C_{3-8}$-Cycloalkoxy)carbonyl, Oxacycloalkyl von bis zu 7 Kohlenstoffatomen, Oxacycloalkoxy von bis zu 7 Kohlenstoffatomen, Oxacycloalkoxy (von bis zu 7 Kohlenstoffatomen)-carbonyl und Oxacycloalkyl (von bis zu 7 Kohlenstoffatomen)-carbonyloxy, und wobei b) jede Alkyl- und Alkenylgruppe in a) nicht-substituiert oder weitersubstituiert ist mit Fluor, $C_{1-6}$-Alkyl oder $C_{1-6}$-Alkoxy, mit der Maßgabe, daß das letztgenannte Alkoxy nicht an ein Kohlenstoffatom gebunden ist, der bereits einfach an ein anderes Sauerstoffatom gebunden ist, und

ii) $C_{1-16}$-Alkoxy, $C_{2-16}$-Alkanoyloxy, $C_{1-16}$-Alkoxy-C(O)-, $C_{2-16}$-Alkenyloxy-C(O)- und $C_{3-16}$-Alkenoyloxy, die jeweils weitersubstituiert sein können mit Fluor, Aryl von bis zu 10 Kohlenstoffatomen oder $C_{1-6}$-Alkoxy, mit der Maßgabe, daß das letztgenannte Alkoxy nicht an ein Kohlenstoffatom gebunden ist, das einfach an ein anderes Sauerstoffatom gebunden ist,

iii) Aryl von bis zu 10 Kohlenstoffatomen, $C_{3-8}$-Cycloalkyl und Oxacycloalkyl von bis zu 7 Kohlenstoffatomen, die jeweils nicht-substituiert oder substituiert sind mit einem Substituenten, ausgewählt unter den in i)a) und b), vorstehend, angegebenen,

iv) Aryloxy mit bis zu 10 Kohlenstoffatomen, Cycloalkoxy mit bis zu 8 Kohlenstoffatomen, Cycloalkyl (mit bis zu 8 Kohlenstoffatomen)-C(O)O-, Cycloalkoxy (mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacyloalkenyloxy mit bis zu 7 Kohlenstoffatomen, Oxacycloalkoxy (mit bis zu 7 Kohlenstoffatomen)-carbonyl, Oxacycloalkyl (mit bis zu 7 Kohlenstoffatomen)-carbonyloxy, Aryloxy mit bis zu 11 Kohlenstoffatomen und Aroyloxy mit bis zu 11 Kohlenstoffatomen, von denen jedes nicht-substituiert oder substituiert ist mit Fluor, $C_{1-6}$-Alkyl oder $C_{1-6}$-Alkoxy, mit der Maßgabe, daß das letztgenannte Alkoxy nicht an ein Kohlenstoffatom gebunden ist, daß einfach an ein anderes Sauerstoffatom gebunden ist, wobei 2 benachbarte Gruppen $R_7$ und $R_8$ zusammen mit den Atomen, an die sie gebunden sind, einen 5-8-gliedrigen Cycloalkyl-, Cycloalkenyl- oder Oxacycloalkyl-Ring oder einen 6-14-gliedrigen Bicyclo-Ring bilden können,

a und e jeweils Null oder 1 sind, wobei ein zusätzliches e 1 ist,
jedes w, x und z unabhängig Null oder 1 ist, jedoch, wenn w Null ist, dann muß einer von x und z Null sein,
jedes V unabhängig Null oder 1 ist,
jedes $A_1$ unabhängig die folgende Formel aufweist

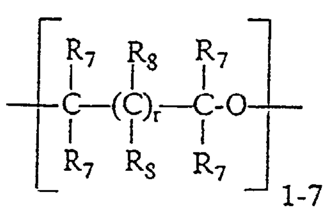 ;

wobei jedes $L_3$ unabhängig -CO-, -O-CO-, -$NR_1$-CO- ist, wobei der rechte Bereich an die $Grp_1$ Gruppe gebunden ist, mit der Maßgabe, daß das $Grp_1$-Atom, mit dem $L_3$ verbunden ist, kein Carbonyl-Kohlenstoffatom, kein Amidostickstoff und kein Carboxysauerstoff ist und $L_3$ -O- oder -$NR_1$- ist, wenn ein derartiges $Grp_1$-Atom ein Carbonylkohlenstoffatom ist,
wobei $L_4$ unabhängig -CO-, -O-CO-, -CO-O-, -$NR_1$-CO-, -CO-$NR_1$-, -O-CO-O-, -$NR_1$-CO-$NR_1$- oder -$NR_1$-CO-O- ist, wenn w 1 ist und ausgewählt ist aus der gleichen Gruppe wie $L_3$, wenn w 0 ist, wobei jedes $R_{16}$ unabhängig die folgende Formel aufweist

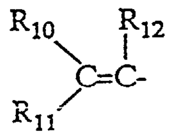

(VIII)

wobei $R_{12}$ Wasserstoff oder $C_{1-7}$-Alkyl ist und jedes $R_{10}$ und $R_{11}$ unabhängig Wasserstoff, $C_{1-7}$-Alkyl oder $-COOR_{13}$ ist, wobei $R_{13}$ Wasserstoff oder $C_{1-4}$Alkyl ist, und $R_{17}$ ausgewählt ist unter

a) H, $NH_2$, OH, -NCO, -NCS, -C(O)-Halogen und $COOR_{12}$, wenn das Nicht-$R_{17}$-Atom, mit dem es verbunden ist, ein nicht-Carbonyl-gesättigter Kohlenstoff ist oder das nicht-$R_{17}$-Atom, mit dem verbunden ist, ein Kohlenstoffist, der Teil eines Rings ist,
b) H, -C(O)-Halogen, $-C(O)-R_{12}$, $-C(O)-OR_{12}$ und $R_{12}$, wenn das nicht-$R_{17}$-Atom, mit dem es verbunden ist, ein Sauerstoff ist, der kein Carboxysauerstoff ist,
c) H und $R_{12}$, wenn das nicht-$R_{17}$-Atom, mit dem es verbunden ist, ein Carboxy-Sauerstoffatom ist,
d) $-C(O)-R_{12}$, $-C(O)-OR_{12}$, $-C(O)N(R_1)R_{12}$ und $R_{12}$, wenn das nicht-$R_{17}$-Atom, mit dem es verbunden ist, ein Aminostickstoff ist, oder $R_{12}$, wenn das nicht-$R_{17}$-Atom, mit dem es verbunden ist, ein Amidostickstoff ist,
e) OH, $R_{12}$, $CH_2C(O)R_{12}$, $CH_2C(O)OR_{12}$, $NH_2$ und $-NHR_{12}$, wenn das nicht-$R_{17}$-Atom, mit dem es verbunden ist, ein Carboxy-Kohlenstoffatom ist, und
f) H, OH, Hal, $-OR_{12}$, wenn das nicht-$R_{17}$-Atom, mit dem es verbunden ist, Silizium ist, wobei das Polymer in seinem vollständig aufgequollenen Zustand einen Wassergehalt von mindestens 10 Gew.% aufweist.

**2.** Polymer nach Anspruch 1, bei dem mindestens 30 % der A-Blöcke in einem Makromer der Formel IIIa Homopolymere mit nicht mehr als 15 wiederkehrenden Einheiten sind.

**3.** Polymer nach Anspruch 1, bei dem h 1 ist.

**4.** Polymer nach Anspruch 1, bei dem $Cap_1$ die Formel VIa aufweist.

**5.** Polymer nach Anspruch 4, bei dem $R_{16}$ in der Formel VIa die Formel VIII aufweist, wobei $R_{10}$-$R_{12}$ jeweils unabhängig Wasserstoff oder Methyl sind.

**6.** Polymer der Formel IIIa nach Anspruch 1, bei dem $Cap_1$ dargestellt ist durch die Formel

$$R_{16}(L_4)_z(R_6)_w(A_1)_v(L_3)_x \qquad \text{(VIa)}$$

wobei $R_{16}$ die Formel VIII nach Anspruch 1 aufweist, wobei $R_{10}$-$R_{12}$ jeweils unabhängig Wasserstoff oder Methyl, V 0 ist und wobei die anderen Variablen die in Anspruch 1 definierten Bedeutungen haben.

**7.** Polymer nach Anspruch 1, wobei

Sil

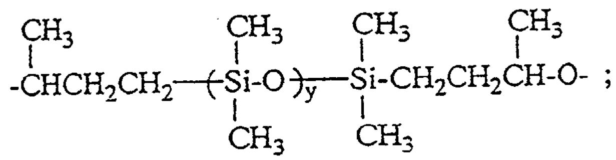

ist, wobei
a 1,

e 0,
$R_{14}$ und $R_{15}$ jeweils -O- ist,
L

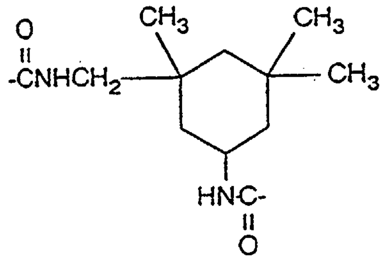 ;

ist, wobei
h 1,
A $(CH_2CH_2O)_t$ ist, und
$Cap_1$

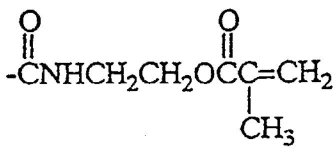

ist.

**8.** Polymer nach Anspruch 2, bei dem alle Variablen die Bedeutungen wie in Anspruch 7 haben.

**9.** Polymer nach Anspruch 1, das ein Copolymer mit mindestens 10 Gew.-% aus einem oder mehreren Makromeren der Formel IIIa nach Anspruch 1 und mindestens einem copolymerisierbaren Monomer ist, das kein Makromer der Formel IIIa nach Anspruch 1 ist, das in seinem vollständig aufgequollenen Zustand einen Wassergehalt von mindestens 10 Gew.-% aufweist.

**10.** Polymer nach Anspruch 2, das ein Copolymer aus einem oder mehreren Makromeren der Formel IIIa nach Anspruch 2 und mindestens einem copolymerisierbaren Monomer ist, das kein Makromer der Formel IIIa nach Anspruch 2 ist, das in seinem vollständig aufgequollenen Zustand einen Wassergehalt von mindestens 10 Gew.-% aufweist.

**11.** Polymer nach Anspruch 7 oder 8, das ein Copolymer aus einem oder mehreren Makromeren nach Anspruch 7 oder 8 ist und mindestens einem copolymerisierbaren Monomer ist, das kein Makromer nach Anspruch 7 oder 8 ist, das in seinem vollständig aufgequollenen Zustand einen Wassergehalt von mindestens 10 Gew.-% aufweist.

**12.** Ophthalmische Vorrichtung, die ein optisch klares Polymer nach Anspruch 1 oder 2 umfaßt.

**13.** Ophthalmische Vorrichtung, die ein optisch klares Polymer nach Anspruch 7 oder 8 umfaßt.

**14.** Ophthalmische Vorrichtung, die ein optisch klares Polymer nach Anspruch 9 oder 10 umfaßt.

**15.** Ophthalmische Vorrichtung, die ein optisch klares Polymer nach Anspruch 11 umfaßt.

**16.** Ophthalmische Vorrichtung nach einem der Ansprüche 12 oder 14, die eine Kontaktlinse ist.

**17.** Ophthalmische Vorrichtung nach einem der Ansprüche 13 oder 15, die eine Kontaktlinse ist.

**Patentansprüche für folgenden Vertragsstaat : ES**

**1.** Verfahren zur Herstellung eines Polymers aus einem oder mehreren Makromeren der Formel

$$Cap_1\text{-}Grp_1\text{-}Cap_1 \qquad \text{(IIIa)}$$

wobei $Cap_1$ durch die folgenden Formeln dargestellt ist

$$R_{16}(L_4)_z(R_6)_w(A_1)_v(L_3)_x\text{-} \qquad \text{(VIa)}$$

oder

$$R_{17}(L_4)_z(R_6)_w(A_1)_v(L_3)_x\text{-} \qquad \text{(VIIa),}$$

$Grp_1$ durch die folgende Formel dargestellt ist

$$\text{-}(R_{15}\text{-}A\text{-}(L)_h)_a\text{-}Seg_1\text{-}((L)_h\text{-}R_{14}\text{-}Sil)_e\text{-} \qquad \text{(IIa)}$$

und wobei $Seg_1$ durch die folgende Formel dargestellt ist

$$\{R_{14}\text{-}Sil\text{-}(L)_h\text{-}R_{15}\text{-}A\} \qquad \text{(Ia)}$$

wobei die Variablen die folgende Bedeutung haben:

$R_{14}$ ist eine Bindung, $-N(R_1)-$ oder -O-,
$R_{15}$ ist -O- oder $-N(R_1)-$,
$R_1$ ist Wasserstoff, $C_{1-4}$Alkyl oder Phenyl,
h ist 1 oder h kann Null sein, wenn das Atom von Sil, mit dem es andernfalls verbunden wäre, Kohlenstoff ist, mit der Maßgabe, daß mindestens ein h nicht Null ist,
jedes Sil unabhängig die Formel

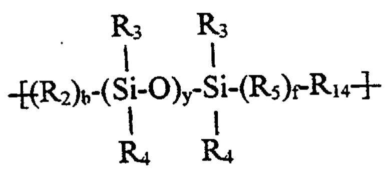

(IV)

aufweist, wobei jedes L unabhängig die Formel $-L_1R_6L_2-$ aufweist, und jedes A unabhängig die Formel

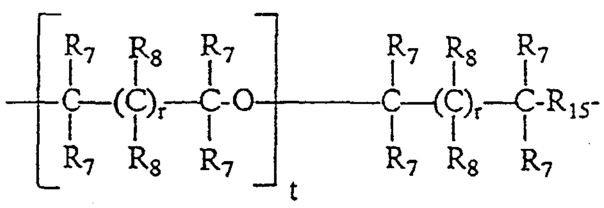

(V)

aufweist, wobei in der Formel IV jedes $R_2$ und jedes $R_5$ unabhängig verzweigtes $C_{3-7}$-Alkylen, Carbonyl, $C_{1-6}$-Alkylencarbonyl, $C_{1-4}$Alyklen-(oxy-$C_{1-4}$-alkylen)$_g$- oder $C_{1-4}$-Alkylen-$OCH_2$-(hydroxy-$C_{1-4}$-alkylen)-$CH_2$- ist, wobei g eine ganze Zahl von 1 bis 10 ist,
jedes b und jedes f1 ist,
jedes y unabhängig 1-200 ist,
und wobei jedes $R_3$ und jedes $R_4$ unabhängig ausgewählt ist unter $C_{1-18}$-Alkyl und Aryl von bis zu 12 Kohlenstoffatomen,
und wobei in L:
jedes $L_1$ und $L_2$ unahhängig -CO-O- oder -CO-NH- ist, wobei der Sauerstoff oder Stickstoff an $R_6$ gebunden ist, oder -CO- oder eine Bindung ist, und wobei jedes $R_6$ unabhängig ist

(i) -($C_{1-25}$aliphatisch)-, oder
(ii) eine Gruppe der Formel

$$-(C_{1-20}\text{aliphatisch})_j\text{-}Q_k\text{-}[(\text{cycloaliphatisch mit 5-7 Atomen oder Aryl von bis zu 25 Kohlenstoffatomen})\text{-}Q_{(k1)}\text{-}(C_{1-20}\text{aliphatisch})_{(j1)}]_D\text{-} \qquad (IX),$$

wobei jeder von j, k, kl und j1 unabhängig Null oder Eins ist, jedoch wenn j 0 ist, dann ist k 0 und wenn j1 0 ist dann ist kl 0,
jedes D 1 bis 3 ist,
jede aliphatische Gruppe in $R_6$ von (i) oder (ii) vorstehend durchgehend ist oder an irgendeinem Punkt durch Q unterbrochen ist,
jede aliphatische-, cycloaliphatische- und Aryl-Gruppe in $R_6$ von (i) oder (ii) vorstehend nicht-substituiert oder substituiert ist mit einem oder mehreren Substituenten, welche Halogen, Hydroxy, $C_{1-4}$-Alkyl, Carboxy oder $C_{1-12}$-Perhalogenalkyl sind,
jedes Q unabhängig ausgewählt ist unter -O-, -CO-O-, O-CO-, -$NR_1$-, -$NR_1$-CO-, -CO -$NR_1$-, -O-CO-$NR_1$-, -$NR_1$-CO-O-, O-CO-O- und -$NR_1$-CO-$NR_1$-,
und in Formel V:
jedes r unabhängig 0-4 ist,
jedes t unabhängig 3-200 ist und
jedes $R_7$ unabhängig ausgewählt ist unter den nachstehenden Gruppen i) und iii) und jedes $R_8$ unabhängig ausgewählt ist unter den nachstehenden Gruppen i)-iv):

i) Wasserstoff, Halogen, nicht-substituiertes $C_{1-16}$-Alkyl, substituiertes $C_{1-16}$-Alkyl, nicht-substituiertes $C_{2-16}$-Alkenyl und substituiertes $C_{2-16}$-Alkenyl, wobei a) die Substituenten an den Alkyl- und Alkenyl-Gruppen in i) unabhängig ausgewählt sind unter Fluor, $C_{1-16}$-Alkoxy, $C_{2-16}$-Alkanoyloxy, $C_{1-16}$-Alkoxy-C(O)-, $C_{2-16}$-Alkenyloxy-C(O)-, $C_{3-16}$-Akkenoyloxy, Aryl von bis zu 10 Kohlenstoffatomen, Aryloxy von bis zu 10 Kohlenstoffatomen, Aroyl von bis zu 11 Kohlenstoffatomen, Aroyloxy von bis zu 11 Kohlenstoffatomen, Aryl (von bis zu 10 Kohlenstoffatomen)-oxycarbonyl, $C_{3-8}$-Cycloalkyl, $C_{3-8}$-Cycloalkoxy, ($C_{3-8}$-Cycloalkyl)-carbonyloxy, ($C_{3-8}$-Cycloalkoxy)carbonyl, Oxacycloalkyl von bis zu 7 Kohlenstoffatomen, Oxacycloalkoxy von bis zu 7 Kohlenstoffatomen, Oxacycloalkoxy (von bis zu 7 Kohlenstoffatomen)-carbonyl und Oxacycloalkyl (von bis zu 7 Kohlenstoffatomen)-carbonyloxy, und wobei b) jede Alkyl- und Alkenylgruppe in a) nicht-substituiert oder weitersubstituiert ist mit Fluor, $C_{1-16}$-Alkyl oder $C_{1-6}$-Alkoxy, mit der Maßgabe, daß das letztgenannte Alkoxy nicht an ein Kohlenstoffatom gebunden ist, der bereits einfach an ein anderes Sauerstoffatom gebunden ist, und
ii) $C_{1-16}$-Alkoxy, $C_{2-16}$-Alkanoyloxy, $C_{1-16}$-Alkoxy-C(O)-, $C_{2-16}$-Alkenyloxy-C(O)- und $C_{3-16}$-Alkenoyloxy, die jeweils weitersubstituiert sein können mit Fluor, Aryl von bis zu 10 Kohlenstoffatomen oder $C_{1-6}$-Alkoxy, mit der Maßgabe, daß das letztgenannte Alkoxy nicht an ein Kohlenstoffatom gebunden ist, das einfach an ein anderes Sauerstoffatom gebunden ist.
iii) Aryl von bis zu 10 Kohlenstoffatomen, $C_{3-8}$-Cycloalkyl und Oxacycloalkyl von bis zu 7 Kohlenstoffatomen, die jeweils nicht-substituiert oder substituiert sind mit einem Substituenten, ausgewählt unter den in i)a) und b), vorstehend, angegebenen,
iv) Aryloxy mit bis zu 10 Kohlenstoffatomen, Cycloalkoxy mit bis zu 8 Kohlenstoffatomen, Cycloalkyl (mit bis zu 8 Kohlenstoffatomen)-C(O)O-, Cycloalkoxy (mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacyloalkenyloxy mit

bis zu 7 Kohlenstoffatomen, Oxacycloalkoxy (mit bis zu 7 Kohlenstoffatomen)-carbonyl, Oxacycloalkyl (mit bis zu 7 Kohlenstoffatomen)-carbonyloxy, Aryloxy mit bis zu 11 Kohlenstoffatomen und Aroyloxy mit bis zu 11 Kohlenstoffatomen, von denen jedes nicht-substituiert oder substituiert ist mit Fluor, $C_{1-6}$-Alkyl oder $C_{1-6}$-Alkoxy, mit der Maßgabe, daß das letztgenannte Alkoxy nicht an ein Kohlenstoffatom gebunden ist, daß einfach an ein anderes Sauerstoffatom gebunden ist, wobei 2 benachbarte Gruppen $R_7$ und $R_8$ zusammen mit den Atomen, an die sie gebunden sind, einen 5-8-gliedrigen Cycloalkyl-, Cycloalkenyl- oder Oxacycloalkyl-Ring oder einen 6-14-gliedrigen Bicyclo-Ring bilden können,

a und e jeweils Null oder 1 sind, wobei ein zusätzliches e 1 ist,
jedes w, x und z unabhängig Null oder 1 ist, jedoch, wenn w Null ist, dann muß einer von x und z Null sein,
jedes V unabhängig Null oder 1 ist,
jedes $A_1$ unabhängig die folgende Formel aufweist

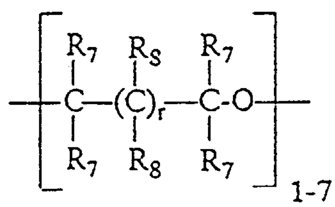 ;

wobei jedes $L_3$ unabhängig -CO-, -O-CO-, $-NR_1-CO-$ ist, wobei der rechte Bereich an die $Grp_1$ Gruppe gebunden ist, mit der Maßgabe, daß das $Grp_1$-Atom, mit dem $L_3$ verbunden ist, kein Carbonyl-Kohlenstoffatom, kein Amidostickstoff und kein Carboxysauerstoff ist und $L_3$ -O- oder $-NR_1-$ ist, wenn ein derartiges $Grp_1$-Atom ein Carbonylkohlenstoffatom ist,
wobei $L_4$ unabhängig -CO-, -O-CO-, -CO-O-, $-NR_1-CO-$, $-CO-NR_1-$, -O-CO-O-, $-NR_1-CO-NR_1-$ oder $-NR_1-CO-O-$ ist, wenn w 1 ist und ausgewählt ist aus der gleichen Gruppe wie $L_3$, wenn w 0 ist, wobei jedes $R_{16}$ unabhängig die folgende Formel aufweist

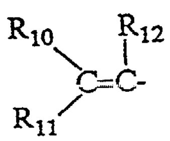

(VIII)

wobei $R_{12}$ Wasserstoff oder $C_{1-7}$-Alkyl ist und jedes $R_{10}$ und $R_{11}$ unabhängig Wasserstoff, $C_{1-7}$-Alkyl oder $-COOR_{13}$ ist, wobei $R_{13}$ Wasserstoff oder $C_{1-4}$-Alkyl ist,
und $R_{17}$ ausgewählt ist unter

a) H, $NH_2$, OH, -NCO, -NCS, -C(O)-Halogen und $COOR_{12}$, wenn das Nicht-$R_{17}$-Atom, mit dem es verbunden ist, ein nicht-Carbonyl-gesättigter Kohlenstoff ist oder das nicht-$R_{17}$-Atom, mit dem verbunden ist, ein Kohlenstoff ist, der Teil eines Rings ist,
b) H, -C(O)-Halogen, $-C(O)-R_{12}$, $-C(O)-OR_{12}$ und $R_{12}$, wenn das nicht-$R_{17}$-Atom, mit dem es verbunden ist, ein Sauerstoff ist, der kein Carboxysauerstoff ist,
c) H und $R_{12}$, wenn das nicht-$R_{17}$-Atom, mit dem es verbunden ist, ein Carboxy-Sauerstoffatom ist,
d) $-C(O)-R_{12}$, $-C(O)-OR_{12}$, $-C(O)N(R_1)R_{12}$ und $R_{12}$, wenn das nicht-$R_{17}$-Atom, mit dem es verbunden ist, ein Aminostickstoffist, oder $R_{12}$, wenn das nicht-$R_{17}$-Atom, mit dem es verbunden ist, ein Amidostickstoff ist,
e) OH, $R_{12}$, $CH_2C(O)R_{12}$, $CH_2C(O)OR_{12}$, $NH_2$ und $-NHR_{12}$, wenn das nicht-$R_{17}$-Atom, mit dem es verbunden ist, ein Carboxy-Kohlenstoffatom ist, und
f) H, OH, Hal, $-OR_{12}$, wenn das nicht-$R_{17}$-Atom, mit dem es verbunden ist, Silizium ist, wobei das Polymer in seinem vollständig aufgequollenen Zustand einen Wassergehalt von mindestens 10 Gew.% aufweist, wobei das Makromer auf eine als solche bekannte Art und Weise polymerisiert wird.

**2.** Verfahren nach Anspruch 1, bei dem mindestens 30 % der A-Blöcke in einem Makromer der Formel IIIa Homopolymere mit nicht mehr als 15 wiederkehrenden Einheiten sind.

**3.** Verfahren nach Anspruch 1, bei dem h 1 ist.

**4.** Verfahren nach Anspruch 1, bei dem $Cap_1$ die Formel VIa aufweist.

**5.** Verfahren nach Anspruch 4, bei dem $R_{16}$ in der Formel VIa die Formel VIII aufweist, wobei $R_{10}$-$R_{12}$ jeweils unabhängig Wasserstoff oder Methyl sind.

**6.** Verfahren nach Anspruch 1, bei dem $Cap_1$ dargestellt ist durch die Formel

$$R_{16}(L_4)_z(R_6)_w(A_1)_v(L_3\text{-})_x\text{-} \qquad \text{(VIa)}$$

wobei $R_{16}$ die Formel VIII nach Anspruch 1 aufweist, wobei $R_{10}$-$R_{12}$ ieweils unabhängig Wasserstoff oder Methyl, V 0 ist und wobei die anderen Variablen die in Anspruch 1 definierten Bedeutungen haben.

**7.** Verfahren nach Anspruch 1, wobei

Sil

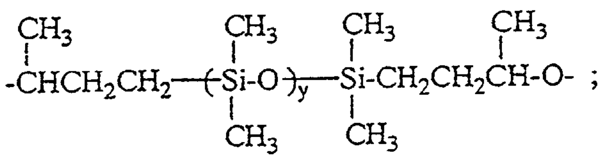

ist, wobei
a 1,
e 0,
$R_{14}$ und $R_{15}$ jeweils -O- ist,
L

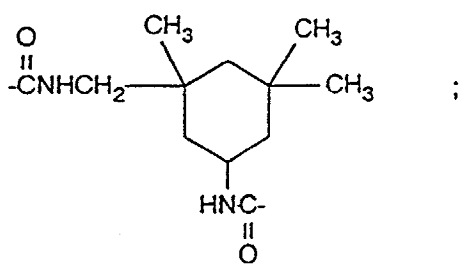

ist, wobei
h 1,
A $(CH_2CH_2O)_t$ ist, und
$Cap_1$

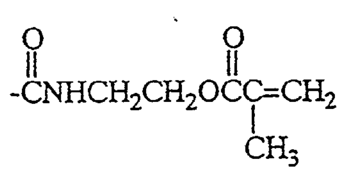

ist.

8. Verfahren nach Anspruch 2, bei dem alle Variablen die Bedeutungen wie in Anspruch 7 haben.

9. Verfahren zur Herstellung eines Polymers nach Anspruch 1, das ein Copolymer mit mindestens 10 Gew.-% aus einem oder mehreren Makromeren der Formel IIIa nach Anspruch 1 und mindestens einem copolymerisierbaren Monomer ist, das kein Makromer der Formel IIIa nach Anspruch 1 ist, das in seinem vollständig aufgequollenen Zustand einen Wassergehalt von mindestens 10 Gew.-% aufweist, worin die Komponenten auf eine als solche bekannte Art und Weise copolymerisiert werden.

10. Verfahren zur Herstellung eines Polymers nach Anspruch 2, das ein Copolymer aus einem oder mehreren Makromeren der Formel IIIa nach Anspruch 2 und mindestens einem copolymerisierbaren Monomer ist, das kein Makromer der Formel IIIa nach Anspruch 2 ist, das in seinem vollständig aufgequollenen Zustand einen Wassergehalt von mindestens 10 Gew.-% aufweist, worin die Komponenten auf eine als solche bekannte Art und Weise copolymerisiert werden.

11. Verfahren zur Herstellung eines Polymers nach Anspruch 7 oder 8, das ein Copolymer aus einem oder mehreren Makromeren der Formel IIIa nach Anspruch 7 oder 8 ist und mindestens einem copolymerisierbaren Monomer ist, das kein Makromer der Formel IIIa nach Anspruch 7 oder 8 ist, das in seinem vollständig aufgequollenen Zustand einen Wassergehalt von mindestens 10 Gew.-% aufweist, worin die Komponenten auf eine als solche bekannte Art und Weise copolymerisiert werden.

12. Ophthalmische Vorrichtung, die ein optisch klares Polymer, hergestellt nach Anspruch 1 oder 2 umfaßt.

13. Ophthalmische Vorrichtung, die ein optisch klares Polymer, hergestellt nach Anspruch 7 oder 8 umfaßt.

14. Ophthalmische Vorrichtung, die ein optisch klares Polymer, hergestellt nach Anspruch 9 oder 10 umfaßt.

15. Ophthalmische Vorrichtung, die ein optisch klares Polymer, hergestellt nach Anspruch 11 umfaßt.

16. Ophthalmische Vorrichtung nach einem der Ansprüche 12 oder 14, die eine Kontaktlinse ist.

17. Ophthalmische Vorrichtung nach einem der Ansprüche 13 oder 15, die eine Kontaktlinse ist.

**Revendications**

**Revendications pour les Etats contractants suivants : AT, BE, CH, DE, DK, FR, GB, IT, LI, LU, NL, SE**

1. Polymère fabriqué à partir d'un ou plusieurs macromères de formule

$$Cap_1\text{-}Grp_1\text{-}Cap_1 \qquad (IIIa)$$

dans laquelle $Cap_1$ est représenté par les formules

$$R_{16}\,(L_4)_z(R_6)_w(A_1)_v(L_3)_x\text{-} \qquad (VIa)$$

ou

$$R_{17}\,(L_4)_z(R_6)_w(A_1)_v(L_3)_x\text{-} \qquad (VIIa)$$

$Grp_1$ est représenté par la formule

$$\text{-}(R_{15}\text{-}A\text{-}(L)_h)_a\text{-}Seg_1\text{-}((L)_h\text{-}R_{14}\text{-}Sil)_e\text{-} \qquad (IIa)$$

et dans laquelle $Seg_1$ est représenté par la formule

$$-(R_{14}\text{-Sil-}(L)_h\text{-}R_{15}\text{-A})- \quad (Ia)$$

dans laquelle les variables ont les significations suivantes :

$R_{14}$ représente une liaison, $-N(R_1)-$, ou -O- ;
$R_{15}$ représente -O- ou $-N(R_1)-$ ;
$R_1$ représente un atome d'hydrogène, un groupe alkyle en $C_{1-4}$, ou un groupe phényle ;
h vaut 1, ou h peut valoir 0 lorsque l'atome de Sil auquel il serait sinon attaché est un atome de carbone ; à condition qu'au moins un h soit différent de 0 ;
chacun des Sil est indépendamment de formule

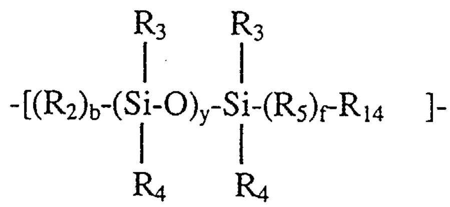

(IV)

chacun des L est indépendamment représenté par la formule

$$-L_1R_6L_2-$$

et chacun des A est indépendamment représenté par la formule

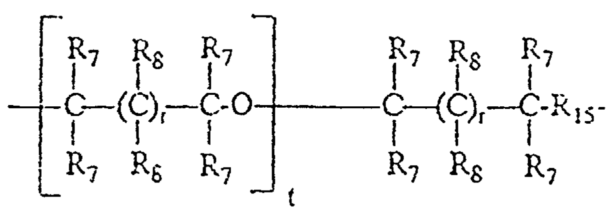

(V)

dans laquelle dans la formule IV, chacun des $R_2$ et chacun des $R_5$ représente indépendamment un groupe alkylène en $C_{3-7}$ ramifié, carbonyle, (alkylène en $C_{1-6}$)carbonyle, (alkylène en $C_{1-4}$)-(oxyalkylène en $C_{1-4})_g$- ou (alkylène en $C_{1-4}$)-$OCH_2$-(hydroxy-alkylène en $C_{1-4}$)-$CH_2$- ;
avec g étant un nombre entier compris entre 1 et 10;
chaque b et chaque f vaut 1 ;
chaque y vaut indépendamment entre 1 et 200 ;
et chacun des $R_3$ et $R_4$ est indépendamment choisi entre un groupe alkyle en $C_{1-18}$ et un groupe aryle contenant jusqu'à 12 atomes de carbone ;
et dans L :
chacun des $L_1$ et $L_2$ représente indépendamment

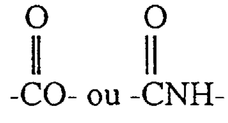

ou

dans lequel l'atome d'oxygène ou d'azote est lié à $R_6$, ou

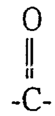

ou une liaison ; et
chacun des $R_6$ représente indépendamment

(i) un groupe -(aliphatique en $C_{1-25}$)- ou
(ii) un groupe de formule

$$-(\text{aliphatique en } C_{1-20})_j\text{-}Q_k\text{-[(cycloaliphatique à 5 à 7 membres ou aryle contenant jusqu'à 25 atomes de carbone)-}Q(k_1)\text{-(aliphatique en } C_{1-20})_{(j1)}]_D\text{-} \quad \text{(IX),}$$

chacun des j, k, k1 et j1 pouvant valoir indépendamment zéro ou un, mais si j vaut 0, alors k vaut 0 et si j1 vaut 0, alors k1 vaut 0 ;
chacun des D vaut 1 à 3 ;
chacun des groupes aliphatiques dans le $R_6$ (i) ou (ii) ci-dessus est ininterrompu ou interrompu en un point quelconque par Q ;
chacun des groupes aliphatiques, cycloaliphatiques et aryle dans le $R_6$ (i) ou (ii) ci-dessus est non substitué ou substitué par un ou plusieurs substituants, ces substituants étant un atome d'halogène, un groupe hydroxy, alkyle en $C_{1-4}$, carboxy ou perhalogénoalkyle en $C_{1-12}$ ;
chacun des Q est indépendamment choisi par -O-,

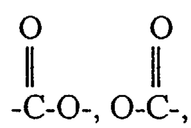

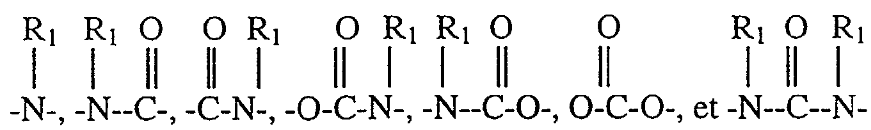

et dans la formule V :
chacun des r vaut indépendamment 0-4 ;
chacun des t vaut indépendamment 3-200 ; et
chacun des $R_7$ est indépendamment choisi dans les ensembles i) et iii) ci-dessous et chacun des $R_8$ est indépendamment choisi dans les ensemble i)-iv) ci-dessous :

i) atome d'hydrogène, d'halogène, groupes alkyle en $C_{1-16}$ non substitués, alkyle en $C_{1-16}$ substitués, alcényle en $C_{2-16}$ non substitués, alcényle en $C_{2-16}$ substitués dans lesquels a) les substituants des groupes alkyle et alcényle i) sont indépendamment choisis parmi un atome de fluor, un groupe alcoxy en $C_{1-16}$, alcanoyloxy en $C_{2-16}$, (alcoxy en $C_{1-16}$)-C(O)-, (alcényloxy en $C_{2-16}$)-C(O)-, alcénoyloxy en $C_{3-16}$, aryle contenant jusqu'à 10 atomes de carbone, aryloxy contenant jusqu'à 10 atomes de carbone, aroyle contenant jusqu'à 11 atomes de carbone, aroyloxy contenant jusqu'à 11 atomes de carbone, (aryle contenant jusqu'à 10 atomes de carbone)-oxycarbonyle, cycloalkyle en $C_{3-8}$, cycloalkoxy en $C_{3-8}$, (cycloalkyle en $C_{3-8}$)-carbonyloxy, (cycloalkoxy en $C_{3-8}$)carbonyle, oxacyloalkyle contenant jusqu'à 7 atomes de carbone, oxacycloalcoxy contenant jusqu'à 7 atomes de carbone, (oxacycloalkoxy contenant jusqu'à 7 atomes de carbone)- carbonyle et (oxacycloalkyle contenant jusqu'à 7 atomes de carbone)- carbonyloxy; et b) chacun

des groupes alkyle et alcényle dans a) étant non substitué ou encore substitué par un atome de fluor, un groupe alkyle en $C_{1-6}$, ou alcoxy en $C_{1-6}$ à condition que ledit dernier alcoxy mentionné ne soit pas lié à un atome de carbone déjà lié par une liaison simple à un autre atome d'oxygène ; et

ii) groupes alcoxy en $C_{1-6}$, alkanoyloxy en $C_{2-16}$, (alcoxy en $C_{1-16}$)- C(O)-, (alcényloxy en $C_{2-16}$)-C(O)- et alcénoyloxy en $C_{3-16}$, chacun d'entre eux pouvant encore être substitué par un atome de fluor, un groupe aryle contenant jusqu'à 10 atomes de carbone, un groupe alcoxy en $C_{1-6}$ à condition que ce dernier alcoxy mentionné ne soit pas lié à un atome de carbone qui est lié par une liaison simple à un autre atome d'oxygène ;

iii) groupes aryle contenant jusqu'à 10 atomes de carbone, cycloalkyle en $C_{3-8}$, et oxacycloalkyle contenant jusqu'à 7 atomes de carbone, chacun d'entre eux étant non substitué ou substitué par un substituant choisi parmi ceux indiqués dans i)a) et b) ci-dessus ;

iv) groupes aryloxy contenant jusqu'à 10 atomes de carbone, cycloalkoxy contenant jusqu'à 8 atomes de carbone, (cycloalkyle contenant jusqu'à 8 atomes de carbone)-C(O)O-, (cycloalkoxy contenant jusqu'à 8 atomes de carbone)-carbonyle, aroyloxy contenant jusqu'à 11 atomes de carbone, oxacycloalkoxy contenant jusqu'à 7 atomes de carbone, oxacycloalcényloxy contenant jusqu'à 7 atomes, (oxacycloalcoxy contenant jusqu'à 7 atomes de carbone)-carbonyle, (oxacyloalkyle contenant jusqu'à 7 atomes de carbone)-carbonyloxy, aryloxy contenant jusqu'à 11 atomes de carbone et aroyloxy contenant jusqu'à 11 atomes de carbone, chacun d'entre eux étant non substitué ou substitué par un atome de fluor, un groupe alkyle en $C_{1-6}$, ou alcoxy en $C_{1-6}$, à condition que ledit dernier alcoxy mentionné ne soit pas lié à un atome de carbone qui est lié par une liaison simple à un autre atome d'oxygène ; et 2 groupes adjacents $R_7$ et $R_8$, avec les atomes auxquels ils sont attachés, peuvent définir un groupe cycloalkyle, cycloalcényle ou oxacycloalkyle contenant 5 à 8 membres ou un cycle bicyclique contenant 6 à 14 membres,

a et e valent chacun 0 ou 1, mais a plus e vaut 1,
chacun des w, x et z valent indépendamment zéro ou un, mais si w vaut 0, alors l'un parmi x et z doit valoir zéro ;
chacun des V vaut indépendamment zéro ou un ;
chacun des $A_1$ répond indépendamment à la formule

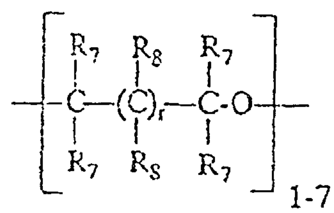 ;

chacun des $L_3$ représente indépendamment

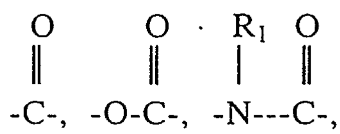

la portion droite attachée au $Grp_1$, à condition que l'atome de $Grp_1$ auquel $L_3$ est attaché, ne soit pas un atome de carbone d'un groupe carbonyle, un atome d'azote d'un groupe amido ou un atome d'oxygène d'un groupe carboxy, et $L_3$ représente -O- ou -$NR_1$- lorsque cet atome de $Grp_1$ est un atome de carbone d'un groupe carbonyle ;
chacun des $R_4$ représente indépendamment

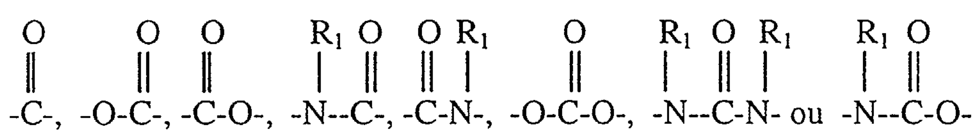

lorsque w vaut un, et choisi dans le même groupe que $L_3$ lorsque w vaut zéro ; chacun des $R_{16}$ est indépendamment représenté par la formule

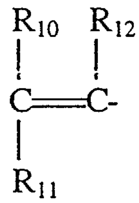

(VIII)

dans laquelle $R_{12}$ représente un atome d'hydrogène ou un groupe alkyle en $C_{1-7}$ et chacun des $R_{10}$ et $R_{11}$ représente indépendamment un atome d'hydrogène, un groupe alkyle en $C_{1-7}$ ou $-COOR_{13}$, $R_{13}$ représentant un atome d'hydrogène ou un groupe alkyle en $C_{1-4}$ ;
et $R_{17}$ est choisi parmi

a) H, $NH_2$, OH, -NCO, -NCS, -C(O)-halogène et $COOR_{12}$ lorsque l'atome non $R_{17}$ auquel il est attaché est un atome de carbone saturé n'appartenant pas à un groupe carbonyle ou l'atome non $R_{17}$ auquel il est attaché est un atome de carbone qui fait partie d'un cycle ;
b) H, -C(O)-halogène, $-C(O)-R_{12}$,$-C(O)-OR_{12}$ et $R_{12}$, lorsque l'atome non $R_{17}$ auquel il est attaché est un atome d'oxygène autre qu'un atome d'oxygène appartenant à un groupe carboxy ;
c) H et $R_{12}$, lorsque l'atome non $R_{17}$ auquel il est attaché est un atome d'oxygène appartenant à un groupe carboxy ;
d) $-C(O)-R_{12}$, $-C(O)-OR_{12}$, $-C(O)N(R_1)R_{12}$ et $R_{12}$ lorsque l'atome non $R_{17}$ auquel il est attaché est un atome d'azote appartenant à un groupe amino, ou $R_{12}$ lorsque l'atome non $R_{17}$ auquel il est attaché est un atome d'azote appartenant à un groupe amido ; .
e) OH, $R_{12}$, $CH_2C(O)R_{12}$, $CH_2C(O)OR_{12}$, $NH_2$, et $-NHR_{12}$ lorsque l'atome non $R_{17}$ auquel il est attaché est un atome de carbone d'un groupe carboxy ; et
f) H, OH, un atome d'halogène, $-OR_{12}$ lorsque l'atome non $R_{17}$ auquel il est attaché est un atome de silicium ;

ledit polymère ayant dans son état complètement gonflé une teneur en eau d'au moins 10% en poids.

**2.** Polymère conforme à la revendication 1, dans lequel au moins 30% des séquences A dans un macromère de formule IIIa sont homopolymère pour pas plus de 15 unités répétées.

**3.** Polymère conforme à la revendication 1, dans lequel h vaut 1.

**4.** Polymère conforme à la revendication 1, dans lequel $Cap_1$ répond à la formule VIa.

**5.** Polymère conforme à la revendication 4, dans lequel $R_{16}$ dans la formule VIa répond à la formule VIII, dans laquelle chacun des $R_{10}$ à $R_{12}$ représente indépendamment un atome d'hydrogène ou un groupe méthyle.

**6.** Polymère conforme à la revendication 1 de formule (IIIa), dans laquelle $Cap_1$ est représenté par la formule

$$R_{16}(L_4)_z(R_6)_w(A_1)_v(L_3)_x- \qquad \text{(VIa)}$$

dans laquelle $R_{16}$ répond à la formule VIII telle que définie dnas la revendication 1, dans laquelle chacun des $R_{10}$ à $R_{12}$ représente indépendamment un atome d'hydrogène ou un groupe méthyle, V vaut 0,
et dans laquelle les autres variables ont la signification définie dans la revendication 1.

**7.** Polymère conforme à la revendication 1, dans laquelle

Sil représente

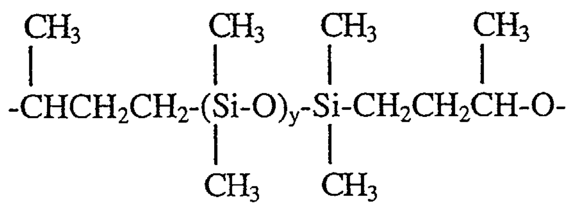 ;

a vaut un ;
e vaut zéro ;
$R_{14}$ et $R_{15}$ représente chacun -O- ;
L représente

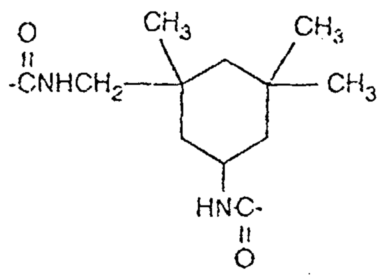 ;

h vaut un ;
A représente $(CH_2-CH_2O)_t$ ; et
$Cap_1$ représente

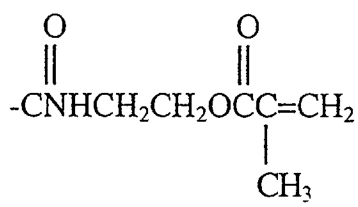

**8.** Polymère conforme à la revendication 2, dans lequel toutes les variables ont les mêmes significations que dans la revendication 7.

**9.** Polymère conforme à la revendication 1, qui est un copolymère d'au moins 10% en poids d'un ou plusieurs macromères de formule IIIa telle que définie dans la revendication 1 et d'au moins un monomère copolymérisable, qui n'est pas un macromère de formule IIIa telle que définie dans la revendication 1, ayant dans son état complètement gonflé une teneur en eau d'au moins 10 % en poids.

**10.** Polymère conforme à la revendication 2, qui est un copolymère d'un ou plusieurs macromères de formule IIIa telle que définie dans la revendication 2 et d'au moins un monomère copolymérisable, qui n'est pas un macromère de formule IIIa telle que définie dans la revendication 2, ayant dans son état complètement gonflé une teneur en eau d'au moins 10 % en poids.

**11.** Polymère conforme à la revendication 7 ou à la revendication 8, qui est un copolymère d'un ou plusieurs macromères tels que définis dans la revendication 7 ou la revendication 8 et d'au moins un monomère copolymérisable, qui n'est pas un macromère tel que défini dans la revendication 7 ou la revendication 8, ayant dans son état complètement gonflé une teneur en eau d'au moins 10 % en poids.

**12.** Dispositif ophtalmique comprenant un polymère optiquement transparent de la revendication 1 ou de la revendication 2.

**13.** Dispositif ophtalmique comprenant un polymère optiquement transparent de la revendication 7 ou de la revendication 8.

**14.** Dispositif ophtalmique comprenant un polymère optiquement transparent de la revendication 9 ou de la revendication 10.

**15.** Dispositif ophtalmique comprenant un polymère optiquement transparent de la revendication 11.

**16.** Dispositif ophtalmique de l'une quelconque des revendication 12 ou 14 qui est une lentille de contact.

**17.** Dispositif ophtalmique de l'une quelconque des revendication 13 ou 15 qui est une lentille de contact.

**Revendications pour l'Etat contractant suivant : ES**

**1.** Procédé pour la fabrication d'un polymère à partir d'un ou plusieurs macromères répondant à la formule

$$Cap_1\text{-}Grp_1\text{-}Cap_1 \qquad \text{(IIIa)}$$

dans laquelle $Cap_1$ est représenté par les formules

$$R_{16}\,(L_4)_z(R_6)_w(A_1)_v(L_3)_x\text{-} \qquad \text{(VIa)}$$

ou

$$R_{17}\,(L_4)_z(R_6)_w(A_1)_v(L_3)_x\text{-} \qquad \text{(VIIa)}$$

$Grp_1$ est représenté par la formule

$$\text{-}(R_{15}\,\text{-}A\text{-}(L)_h\,)_a\text{-}Seg_1\text{-}((L)_h\,\text{-}R_{14}\text{-}Sil)_e\text{-} \qquad \text{(IIa)}$$

et dans laquelle $Seg_1$ est représenté par la formule

$$\text{-}(R_{14}\text{-}Sil\text{-}(L)_h\,\text{-}R_{15}\text{-}A)\text{-} \qquad \text{(Ia)}$$

dans laquelle les variables ont les significations suivantes :

$R_{14}$ représente une liaison, $-N(R_1)-$, ou -O- ;
$R_{15}$ représente -O- ou $-N(R_1)-$ ;
$R_1$ représente un atome d'hydrogène, un groupe alkyle en $C_{1-4}$, ou un groupe phényle ;
h vaut 1, ou h peut valoir 0 lorsque l'atome de Sil auquel il serait sinon attaché est un atome de carbone ; à condition qu'au moins un h soit différent de 0 ;
chacun des Sil est indépendamment de formule

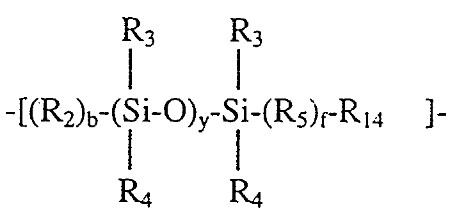

(IV)

chacun des L est indépendamment représenté par la formule

$$-L_1R_6L_2-$$

et chacun des A est indépendamment représenté par la formule

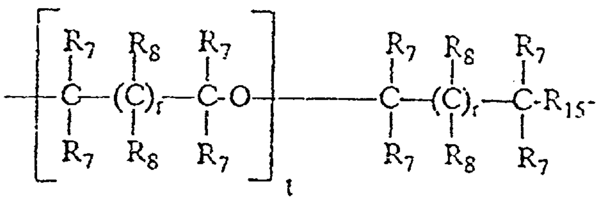

(V)

dans laquelle dans la formule IV, chacun des $R_2$ et chacun des $R_5$ représentent indépendamment un groupe alkylène en $C_{3-7}$ ramifié, carbonyle, (alkylène en $C_{1-6}$)carbonyle, (alkylène en $C_{1-4}$)-(oxyalkylène en $C_{1-4})_g$- ou (alkylène en $C_{1-4}$)-$OCH_2$-(hydroxy-alkylène en $C_{1-4}$)-$CH_2$- ;
avec g étant un nombre entier compris entre 1 et 10 ;
chaque b et chaque f vaut 1 ;
chaque y vaut indépendamment entre 1 et 200 ;
et chacun des $R_3$ et $R_4$ est indépendamment choisi entre un groupe alkyle en $C_{1-18}$ et un groupe aryle contenant jusqu'à 12 atomes de carbone ;
et dans L :
chacun des $L_1$ et $L_2$ représente indépendamment

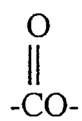 ou 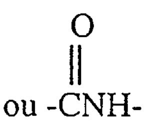

dans lequel l'atome d'oxygène ou d'azote est lié à $R_6$, ou

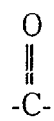

ou une liaison ; et
chacun des $R_6$ représente indépendamment

(i) un groupe -(aliphatique en $C_{1-25}$)- ou
(ii) un groupe de formule

-(aliphatique en $C_{1-20})_j$-$Q_k$-[(cycloaliphatique à 5 à 7 membres ou aryle contenant jusqu'à 25 atomes de carbone)-Q($k_1$)-(aliphatique en $C_{1-20})_{(j1)}]_D$- (IX),

chacun des j, k, k1 et j1 pouvant valoir indépendamment zéro ou un, mais si j vaut 0, alors k vaut 0 et si j1 vaut 0, alors k1 vaut 0 ;
chacun des D vaut 1 à 3 ;

chacun des groupes aliphatiques dans le $R_6$ (i) ou (ii) ci-dessus est ininterrompu ou interrompu en un point quelconque par Q ;
chacun des groupes aliphatiques, cycloaliphatiques et aryle dans le $R_6$ (i) ou (ii) ci-dessus est non substitué ou substitué par un ou plusieurs substituants, ces substituants étant un atome d'halogène, un groupe hydroxy, alkyle en $C_{1-4}$, carboxy ou perhalogénoalkyle en $C_{1-12}$ ;
chacun des Q est indépendamment choisi par -O-,

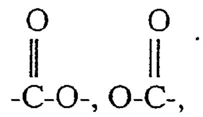

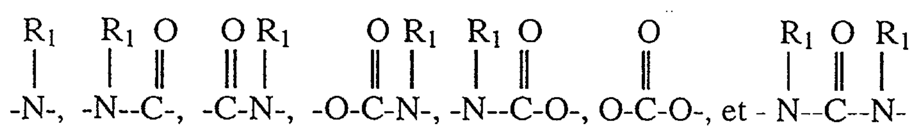

et dans la formule V :
chacun des r vaut indépendamment 0-4 ;
chacun des t vaut indépendamment 3-200 ; et
chacun des $R_7$ est indépendamment choisi dans les ensembles i) et iii) ci-dessous et chacun des $R_8$ est indépendamment choisi dans les ensemble i)-iv) ci-dessous :

i) atome d'hydrogène, d'halogène, groupes alkyle en $C_{1-16}$ non substitués, alkyle en $C_{1-16}$ substitués, alcényle en $C_{2-16}$ non substitués, alcényle en $C_{2-16}$ substitués dans lesquels a) les substituants sur les groupes alkyle et alcényle sont i) indépendamment choisis parmi un atome de fluor, un groupe alcoxy en $C_{1-16}$, alcanoyloxy en $C_{2-16}$, (alcoxy en $C_{1-16}$)-C(O)-, (alcényloxy en $C_{2-16}$)-C(O)-, alcénoyloxy en $C_{3-16}$, aryle contenant jusqu'à 10 atomes de carbone, aryloxy contenant jusqu'à 10 atomes de carbone, aroyle contenant jusqu'à 11 atomes de carbone, aroyloxy contenant jusqu'à 11 atomes de carbone, (aryle contenant jusqu'à 10 atomes de carbone)-oxycarbonyle, cycloalkyle en $C_{3-8}$, cycloalkoxy en $C_{3-8}$, (cycloalkyle en $C_{3-8}$)-carbonyloxy, (cycloalkoxy en $C_{3-8}$)carbonyle, oxacycloalkyle contenant jusqu'à 7 atomes de carbone, oxacycloalcoxy contenant jusqu'à 7 atomes de carbone, (oxacycloalkoxy contenant jusqu'à 7 atomes de carbone)- carbonyle et (oxacycloalkyle contenant jusqu'à 7 atomes de carbone)- carbonyloxy; et b) chacun des groupes alkyle et alcényle dans a) étant non substitué ou encore substitué par un atome de fluor, un groupe alkyle en $C_{1-6}$, ou alcoxy en $C_{1-6}$ à condition que ledit dernier alcoxy mentionné ne soit pas lié à un atome de carbone déjà lié par une liaison simple à un autre atome d'oxygène ; et
ii) groupes alcoxy en $C_{1-6}$, alkanoyloxy en $C_{2-16}$, (alcoxy en $C_{1-16}$)-C(O)-, (alcényloxy en $C_{2-16}$)-C(O)- et alcénoyloxy en $C_{3-16}$, chacun d'entre eux pouvant encore être substitué par un atome de fluor, un groupe aryle contenant jusqu'à 10 atomes de carbone, un groupe alcoxy en $C_{1-6}$ à condition que ce dernier alcoxy mentionné ne soit pas lié à un atome de carbone qui est lié par une liaison simple à un autre atome d'oxygène ;
iii) groupes aryle contenant jusqu'à 10 atomes de carbone, cycloalkyle en $C_{3-8}$, et oxacycloalkyle contenant jusqu'à 7 atomes de carbone, chacun d'entre eux étant non substitué ou substitué par un substituant choisi parmi ceux indiqués dans i)a) et b) ci-dessus ;
iv) groupes aryloxy contenant jusqu'à 10 atomes de carbone, cycloalkoxy contenant jusqu'à 8 atomes de carbone, (cycloalkyle contenant jusqu'à 8 atomes de carbone)-C(O)O-, (cycloalkoxy contenant jusqu'à 8 atomes de carbone)-carbonyle, aroyloxy contenant jusqu'à 11 atomes de carbone, oxacycloalkoxy contenant jusqu'à 7 atomes de carbone, oxacycloalcényloxy contenant jusqu'à 7 atomes, (oxacycloalcoxy contenant jusqu'à 7 atomes de carbone)-carbonyle, (oxacycloalkyle contenant jusqu'à 7 atomes de carbone)-carbonyloxy, aryloxy contenant jusqu'à 11 atomes de carbone et aroyloxy contenant jusqu'à 11 atomes de carbone, chacun d'entre eux étant non substitué ou substitué par un atome de fluor, un groupe alkyle en $C_{1-6}$, ou alcoxy en $C_{1-6}$, à condition que ledit dernier alcoxy mentionné ne soit pas lié à un atome de carbone qui est lié par une liaison simple à un autre atome d'oxygène ; et 2 groupes adjacents $R_7$ et $R_8$, avec les atomes auxquels ils sont attachés, peuvent définir un groupe cycloalkyle, cycloalcényle ou oxacycloalkyle contenant 5 à 8 membres ou un cycle

bicyclique contenant 6 à 14 membres,

a et e valent chacun 0 ou 1, mais a plus e vaut 1,
chacun des w, x et z valent indépendamment zéro ou un, mais si w vaut 0, alors l'un parmi x et z doit valoir zéro ;
chacun des V vaut indépendamment zéro ou un ;
chacun des $A_1$ répond indépendamment à la formule

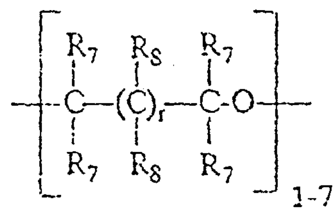 ;

chacun des $L_3$ représente indépendamment

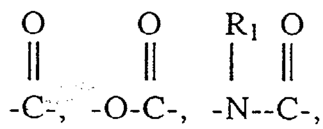

la portion droite attachée au $Grp_1$, à condition que l'atome de $Grp_1$ auquel $L_3$ est attaché, ne soit pas un atome de carbone d'un groupe carbonyle, un atome d'azote d'un groupe amido ou un atome d'oxygène d'un groupe carboxy, et $L_3$ représente -O- ou $-NR_1-$ lorsque cet atome de $Grp_1$ est un atome de carbone d'un groupe carbonyle ;
chacun des $R_4$ représente indépendamment

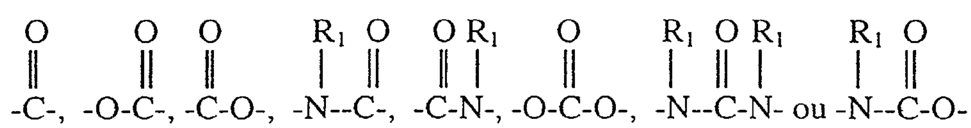

lorsque w vaut un, et choisi dans le même groupe que $L_3$ lorsque w vaut zéro ; chacun des $R_{16}$ est indépendamment représenté par le formule

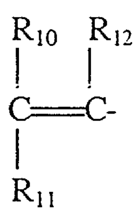

(VIII)

dans laquelle $R_{12}$ représente un atome d'hydrogène ou un groupe alkyle en $C_{1-7}$ et chacun des $R_{10}$ et $R_{11}$ représente indépendamment un atome d'hydrogène, un groupe alkyle en $C_{1-7}$ ou $-COOR_{13}$, $R_{13}$ représentant un atome d'hydrogène ou un groupe alkyle en $C_{1-4}$ ;
et $R_{17}$ est choisi parmi

a) H, $NH_2$, OH, -NCO, -NCS, -C(O)-halogène et $COOR_{12}$ lorsque l'atome non $R_{17}$ auquel il est attaché est un atome de carbone saturé n'appartenant pas à un groupe carbonyle ou l'atome non $R_{17}$ auquel il est attaché est un atome de carbone qui fait partie d'un cycle ;
b) H, -C(O)-halogène, $-C(O)-R_{12}$, $-C(O)-OR_{12}$ et $R_{12}$, lorsque l'atome non $R_{17}$ auquel il est attaché est un atome d'oxygène autre qu'un atome d'oxygène appartenant à un groupe carboxy ;

c) H et $R_{12}$, lorsque l'atome non $R_{17}$ auquel il est attaché est un atome d'oxygène appartenant à un groupe carboxy ;
d) $-C(O)-R_{12}$, $-C(O)-OR_{12}$, $-C(O)N(R_1)R_{12}$ et $R_{12}$ lorsque l'atome non $R_{17}$ auquel il est attaché est un atome d'azote appartenant à un groupe amino, ou $R_{12}$ lorsque l'atome non $R_{17}$ auquel il est attaché est un atome d'azote appartenant à un groupe amido ;
e) OH, $R_{12}$, $CH_2C(O)R_{12}$, $CH_2C(O)OR_{12}$, $NH_2$, et $-NHR_{12}$ lorsque l'atome non $R_{17}$ auquel il est attaché est un atome de carbone d'un groupe carboxy ; et
f) H, OH, un atome d'halogène, $-OR_{12}$ lorsque l'atome non $R_{17}$ auquel il est attaché est un atome de silicium ;

ledit polymère ayant dans son état complètement gonflé une teneur en eau d'au moins 10% en poids, dans lequel le macromère est polymérisé d'une manière connue en soi.

**2.** Procédé conforme à la revendication 1, dans lequel au moins 30% des séquences A dans un macromère de formule IIIa sont homopolymère pour pas plus de 15 unités répétées.

**3.** Procédé conforme à la revendication 1, dans lequel h vaut 1.

**4.** Procédé conforme à la revendication 1, dans lequel $Cap_1$ répond à la formule VIa.

**5.** Procédé conforme à la revendication 4, dans lequel $R_{16}$ dans la formule VIa répond à la formule VIII, dans laquelle chacun des $R_{10}$ à $R_{12}$ représente indépendamment un atome d'hydrogène ou un groupe méthyle.

**6.** Procédé conforme à la revendication 1 de formule (IIIa), dans laquelle $Cap_1$ est représenté par la formule

$$R_{16}(L_4)_z(R_6)_w(A_1)_v(L_3)_x- \qquad \text{(VIa)}$$

dans laquelle $R_{16}$ répond à la formule VIII telle que définie dnas la revendication 1, dans laquelle chacun des $R_{10}$ à $R_{12}$ représente indépendamment un atome d'hydrogène ou un groupe méthyle, V vaut 0,
et dans laquelle les autres variables ont la signification définie dans la revendication 1.

**7.** Procédé conforme à la revendication 1, dans laquelle

Sil représente

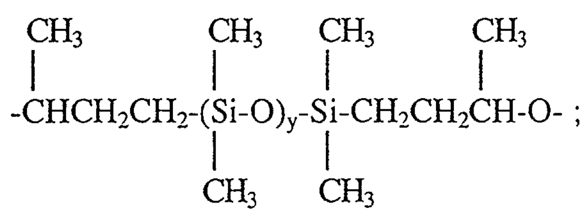

a vaut un ;
e vaut zéro ;
$R_{14}$ et $R_{15}$ représente chacun -O- ;
L représente

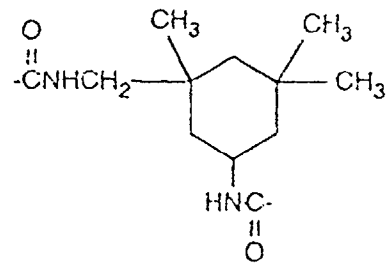 ;

h vaut un ;
A représente $(CH_2\text{-}CH_2O)_t$ ; et
$Cap_1$ représente

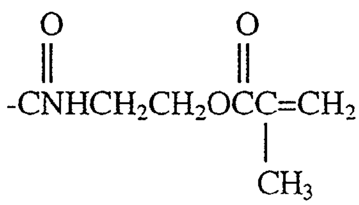

**8.** Procédé conforme à la revendication 2, dans lequel les variables ont les mêmes significations que dans la revendication 7.

**9.** Procédé pour la fabrication d'un polymère conforme à la revendication 1, qui est un copolymère d'au moins 10% en poids d'un ou plusieurs macromères de formule IIIa telle que définie dans la revendication 1 et d'au moins un monomère copolymérisable, qui n'est pas un macromère de formule IIIa telle que définie dans la revendication 1, ayant dans son état complètement gonflé une teneur en eau d'au moins 10 % en poids, dans lequel les composants sont copolymérisés d'une manière connue en soi.

**10.** Procédé pour la fabrication d'un polymère conforme à la revendication 2, qui est un copolymère d'un ou plusieurs macromères de formule IIIa telle que définie dans la revendication 2 et d'au moins un monomère copolymérisable, qui n'est pas un macromère de formule IIIa telle que définie dans la revendication 2, ayant dans son état complètement gonflé une teneur en eau d'au moins 10 % en poids, dans lequel les composants sont copolymérisés d'une manière connue en soi.

**11.** Procédé pour la fabrication d'un polymère conforme à la revendication 7 ou à la revendication 8, qui est un copolymère d'un ou plusieurs macromères tesl que définis dans la revendication 7 ou la revendication 8 et d'au moins un monomère copolymérisable, qui n'est pas un macromère tel que défini dans la revendication 7 ou la revendication 8, ayant dans son état complètement gonflé une teneur en eau d'au moins 10 % en poids, dans lequel les composants sont copolymérisés d'une manière connues en soi.

**12.** Dispositif ophtalmique comprenant un polymère optiquement transparent dont la fabrication est décrite dans la revendication 1 ou la revendication 2.

**13.** Dispositif ophtalmique comprenant un polymère optiquement transparent dont la fabrication est décrite dans la revendication 7 ou de la revendication 8.

**14.** Dispositif ophtalmique comprenant un polymère optiquement transparent dont la fabrication est décrite dans la revendication 9 ou la revendication 10.

**15.** Dispositif ophtalmique comprenant un polymère optiquement transparent dont la fabrication est décrite dans la revendication 11.

**16.** Dispositif ophtalmique de l'une quelconque des revendication 12 ou 14 qui est une lentille de contact.

**17.** Dispositif ophtalmique de l'une quelconque des revndication 13 ou 15 qui est une lentille de contact.